(19) **Europäisches Patentamt**
**European Patent Office**
**Office européen des brevets**

(11) **EP 4 295 257 B1**

(12) **EUROPÄISCHE PATENTSCHRIFT**

(45) Veröffentlichungstag und Bekanntmachung des Hinweises auf die Patenterteilung:
**30.07.2025 Patentblatt 2025/31**

(21) Anmeldenummer: **22711159.8**

(22) Anmeldetag: **17.02.2022**

(51) Internationale Patentklassifikation (IPC):
*H04L 67/306* (2022.01)    *G06Q 50/26* (2024.01)
*H04L 9/40* (2022.01)    *G06F 21/62* (2013.01)
*H04W 12/02* (2009.01)

(52) Gemeinsame Patentklassifikation (CPC):
**G06F 21/6245; G06Q 50/265; H04L 63/02; H04L 63/0428; H04L 63/104; H04L 67/306; H04W 12/02;** G06Q 2220/00

(86) Internationale Anmeldenummer:
**PCT/EP2022/053983**

(87) Internationale Veröffentlichungsnummer:
**WO 2022/175399 (25.08.2022 Gazette 2022/34)**

(54) **AUSLESEN VON IDENTITÄTSATTRIBUTEN MIT EINEM ENTFERNTE SICHERHEITSELEMENT**

READING OUT IDENTITY ATTRIBUTES USING A REMOTE SECURITY ELEMENT

EXTRACTION D'ATTRIBUTS D'IDENTITÉ AU MOYEN D'UN ÉLÉMENT DE SÉCURITÉ DISTANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.02.2021 DE 102021103995**

(43) Veröffentlichungstag der Anmeldung:
**27.12.2023 Patentblatt 2023/52**

(73) Patentinhaber: **Bundesdruckerei GmbH**
**10969 Berlin (DE)**

(72) Erfinder:
• **CLEMENS, Olaf**
  **14624 Dallgow-Döberitz (DE)**
• **DIETRICH, Frank**
  **12437 Berlin (DE)**
• **SCHWAN, Matthias**
  **13086 Berlin (DE)**

(74) Vertreter: **Richardt Patentanwälte PartG mbB**
**Wilhelmstraße 7**
**65185 Wiesbaden (DE)**

(56) Entgegenhaltungen:
**DE-A1- 102019 100 335    US-A1- 2018 176 017**

• **"Chapter 13: Key Management Techniques ED - Menezes A J; Van Oorschot P C; Vanstone S A", October 1996 (1996-10-01), XP001525013, ISBN: 978-0-8493-8523-0, Retrieved from the Internet <URL:http://www.cacr.math.uwaterloo.ca/hac/> [retrieved on 20220602]**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zum Auslesen ein oder mehrerer Identitätsattribute einer auf einem mobilen Endgerät gespeicherten elektronischen Identität unter Verwendung eines Servers, welcher ein entferntes Sicherheitselement bereitstellt. Ferner betrifft die Erfindung einen Server mit einem Sicherheitselement, ein mobiles Endgerät sowie ein System mit einem entsprechenden mobilen Endgerät und Server.

Mobile Endgeräte, wie beispielsweise Smartphones, sind allgegenwärtig. Sie werden in vielen Lebensbereichen und Situationen zur Erfüllung verschiedenster Aufgaben im digitalen Bereich. Dabei kommen mobile Endgeräte auch als Identitätsnachweis, Authentisierungs- und Autorisierungstoken, etwa in elektronischen Geschäftsprozessen, zum Einsatz. Diese Endgeräte unterscheiden sich jedoch sowohl sehr stark in ihrer Hardwareausstattung als auch in dem jeweils verwendeten Betriebssystem und dessen Varianten und Versionen. Eine gemeinsame Basis für den kryptographischen Schutz von auf diesen Geräten zur Verfügung gestellten elektronischen Identitäten bzw. von den entsprechenden elektronischen Identitäten umfassten Identitätsattributen ist somit auf Basis dieser schwierig. Insbesondere ist es schwierig ein kryptographisch gesichertes Verfahren zum Auslesen der Identitätsattribute zu implementieren.

Die DE 10 2019 100335 A1 beschreibt ein Verfahren zum sicheren Bereitstellen eines personalisierten elektronischen Identität auf einem Endgerät, die von einem Nutzer zum Identifizieren bei Inanspruchnahme einer Online-Dienstleistung nutzbar ist, wobei bei dem Verfahren in einem System mit Datenverarbeitungseinrichtungen und einem Endgerät, welches einem Nutzer zugeordnet ist, eine Identifikations-Applikation auf dem Endgerät und weiterhin eine Personalisierungs-Applikation und eine Identitätsprovider-Applikation ausgeführt werden. Das Verfahren umfasst hierbei Folgendes: Übertragen einer Anfrage zum Übermitteln eines dem Nutzer zugeordneten Identitätsattributs von der Personalisierungs-Applikation an die Identitätsprovider-Applikation; Übertragen des Identitätsattributs von der Identitätsprovider-Applikation an die Personalisierungs-Applikation, nachdem von dem Nutzer eine Zustimmung zum Übertragen des Identitätsattributs durch die Identitätsprovider-Applikation empfangen wurde; Erzeugen eines asymmetrischen Schlüsselpaares mit einem öffentlichen und einem privaten Schlüssel durch die Identifikations-Applikation auf dem Endgerät; Übertragen des öffentlichen Schlüssels von der Identifikations-Applikation auf dem Endgerät an die Personalisierungs-Applikation; Erzeugen eines elektronischen Zertifikats für den öffentlichen Schlüssel durch die Personalisierungs-Applikation und Speichern des elektronischen Zertifikats zu einer ersten Public-Key-Infrastruktur der Personalisierungs-Applikation in einem Datenspeicher, weiterhin umfassend: Erzeugen eines Hash-Werts für das Identitätsattribut und Aufnehmen des Hash-Werts in das elektronische Zertifikat. Das Identitätsattributs wird verschlüsselt und zusammen mit dem elektronischen Zertifikat von der Personalisierungs-Applikation an die Identifikations-Applikation auf dem Endgerät übertragen. Beides wird dort in einer lokalen Speichereinrichtung des Endgeräts gespeichert.

In dem Kapitel 13 "Key Management Techniques" des Buchs "Handbook of Applied Cryptography" von A. Menezes, P. van Oorschot und S. Vanstone, 1. Oktober 1996, CRC PRESS, Seiten 543 bis 590, werden Schlüsselverwaltungstechniken zur Kontrolle der Verteilung, Verwendung und Aktualisierung von kryptographischen Schlüsseln beschrieben. Der Schwerpunkt liegt dabei auf Kommunikationsmodellen zur Erstellung und Verwendung von Schlüsseln, die Klassifizierung und Kontrolle von Schlüsseln basierend auf ihrem Verwendungszweck, Techniken für die Verteilung öffentlicher Schlüssel, Architekturen zur Unterstützung automatischer Schlüsselaktualisierungen in verteilten Systemen und die Rolle von vertrauenswürdigen Dritten.

Der Erfindung liegt die Aufgabe zugrunde, ein verbessertes Verfahren zum Auslesen von Identitätsattribute zu schaffen.

Die der Erfindung zugrunde liegende Aufgabe wird jeweils mit den Merkmalen der unabhängigen Patentansprüche gelöst. Ausführungsformen der Erfindung sind in den abhängigen Patentansprüchen angegeben.

Ausführungsformen umfassen ein Verfahren zum Auslesen ein oder mehrerer Identitätsattribute einer elektronischen Identität. Die elektronische Identität ist auf einem mobilen Endgerät gespeicherten und wird von einer auf dem mobilen Endgerät installierten Applikation verwaltet. Die auszulesenden Identitätsattribute sind in verschlüsselter Form auf dem mobilen Endgerät gespeichert. Auf einem Server wird ein entferntes Sicherheitselement für die elektronische Identität bereitgestellt. Der Server kommuniziert mit dem mobilen Endgerät über ein Netzwerk.

Das Verfahren umfasst durch den Server:

- Empfangen der auszulesenden Identitätsattribute von der Applikation, wobei die Identitätsattribute unter Verwendung eines der elektronischen Identität zugeordneten kryptographischen Schlüssels verschlüsselt sind,
- Entschlüsseln der auszulesenden Identitätsattribute durch das entfernte Sicherheitselement,
- Verschlüsseln der entschlüsselten auszulesenden Identitätsattribute unter Verwendung eines in dem entfernten Sicherheitselement gespeicherten ephemeren symmetrischen kryptographischen Schlüssels, welchen sich das entfernte Sicherheitselement mit einem auslesenden Computersystem zur Kommunikationsverschlüsselung teilt,
- Senden der unter Verwendung des ephemeren symmetrischen kryptographischen Schlüssels verschlüsselten auszulesenden Identitätsattribute an ein auszulesendes Computersystem.

Ausführungsformen können den Vorteil haben, dass eine Möglichkeit zur Verwendung eines entfernten Sicherheitselements, d.h. eine Remote Security Elements, zum Bereitstellen kryptographischer Funktionen für eine auf einem mobilen Endgerät installierte Applikation bereitgestellt werden kann. Eine entsprechendes Sicherheitselement umfasst beispielsweise kryptographische Schlüssel zum Ausfüllen kryptographischer Protokolle, wie beispielsweise Verschlüsselungen, Entschlüsselungen und/oder Signaturen. Ein entsprechendes Sicherheitselement muss somit nicht auf dem mobilen Endgerät selbst implementiert sein, sondern kann durch einen Server, welcher mit dem mobilen Endgerät über ein Netzwerk kommuniziert, für das mobile Endgerät bereitgestellt werden.

Beispielsweise kann das entfernte Sicherheitselement für eine verschlüsselte Kommunikation zwischen der auf dem mobilen Endgerät installierten Applikation und dem auslesenden Computersystem verwendet werden. Beispielsweise sind auf dem mobilen Endgerät ein oder mehrere elektronische Identitäten gespeichert. Die elektronischen Identitäten umfassen jeweils ein oder mehrere Identitätsattribute. Die entsprechenden Identitätsattribute sind beispielsweise in verschlüsselter Form auf den mobilen Endgeräten gespeichert. Beispielsweise verfügt das mobile Endgerät nicht über einen oder mehrere kryptographische Schlüssel zum Entschlüsseln der verschlüsselten Identitätsattribute. Beispielsweise sind in den Identitätsattributen verschiedener elektronischer Identitäten mit verschiedenen kryptographischen Schlüsseln verschlüsselt. Der oder die kryptographischen Schlüssel zum Entschlüsseln der Identitätsattribute sind beispielsweise in dem entfernten Sicherheitselement gespeichert. Somit besitzt das mobile Endgerät und damit der Nutzer des mobilen Endgeräts die Verfügungshoheit über die Identitätsattribute, während deren kryptographische Sicherung durch das entfernte Sicherheitselement erfolgt. Somit kann einerseits die kryptographische Sicherung der Identitätsattribute auf einen entfernten Server ausgelagert werden, während der Nutzer nach wie vor die Verfügungshoheit über die Identitätsattribute behält, d.h. der Nutzer kann entscheiden, welche Identitätsattribute welchem Computersystem zum Auslesen zur Verfügung gestellt werden. Ohne Einbeziehung des mobilen Endgeräts und damit des Nutzers des mobilen Endgeräts können keine Identitätsattribute zur Verfügung gestellt werden.

Sollen Identitätsattribute ausgelesen werden, so empfängt der Server die entsprechenden auszulesenden Identitätsattribute von der auf dem mobilen Endgerät installierten Applikation, welche die zugehörige elektronische Identität verwaltet. Das entfernte Sicherheitselement des Servers entschlüsselt die auszulesenden Identitätsattribute unter Verwendung eines der elektronischen Identität zugeordneten kryptographischen Schlüssels. Bei dem kryptographischen Schlüssel handelt es sich beispielsweise um einen symmetrischen kryptographischen Schlüssel, welcher in dem entfernten Sicherheitselement gespeichert ist. Beispielsweise ist das Sicherheitsmodul in Form eines Hardwaresicherheitsmoduls (HSM) des Servers implementiert. Das entsprechende Sicherheitselement kann beispielsweise ein der entsprechenden Applikation zugeordnetes Applet umfassen. In einer der elektronischen Identität zugeordneten Sub-Security-Domain des Sicherheitselements ist beispielsweise der entsprechende kryptographische Schlüssel zur Entschlüsselung der Identitätsattribute gespeichert. Die entschlüsselten auszulesenden Identitätsattribute werden durch das Sicherheitselement unter Verwendung eines ephemeren symmetrischen Schlüssels verschlüsselt. Der entsprechende ephemere symmetrische kryptographische Schlüssel wurde beispielsweise im Zuge eines Aufbaus eines kryptographisch gesicherten Kommunikationskanals zwischen dem entfernten Sicherheitselement und dem auslesenden Computersystem erzeugt. Der entsprechende ephemere symmetrische kryptographische Schlüssel ist beispielsweise zur Sicherung der Kommunikation mit dem auslesenden Computersystem in den entfernten Sicherheitselementen gespeichert. Die Kommunikation zwischen dem entfernten Sicherheitselement bzw. dem Server einerseits und dem auslesenden Computersystem andererseits erfolgt beispielsweise über die Applikation bzw. das mobile Endgerät. Der Server sendet unter Verwendung des ephemeren symmetrischen Schlüssels verschlüsselte Identitätsattribute an das auslesende Computersystem.

Ausführungsformen können den Vorteil haben, dass eine hardwarebasierte Sicherung elektronischer Identitäten auf vom mobilen Endgerät unabhängiger Hardware, d.h. unter Verwendung des entfernten Sicherheitselements ("remote secure element"), unabhängig von der Hard- und Softwareausstattung des mobilen Endgeräts selbst bereitgestellt werden kann. Beispielsweise können Integrität, Authentizität, Zurechenbarkeit der elektronischen Identitäten, etwa durch eine Authentisierung unter Verwendung des entfernten Sicherheitselements bereitgestellt werden. Ferner kann eine dezentrale Speicherung der Identitätsdaten auf dem mobilen Endgerät ermöglicht werden, bei welcher der Nutzer des mobilen Endgeräts die Verfügungshoheit über die Identitätsattribute seiner elektronischen Identitäten behält. Ferner kann eine sichere Verifikation der elektronischen Identitäten auf dem mobilen Endgerät mittels geeigneter kryptographischer Verfahren sichergestellt werden. Schließlich kann eine variable und austauschbare Nutzung von Authentisierungsverfahren ermöglicht werden.

Eine Authentifizierung bezeichnet eine Verifizierung einer behaupteten Eigenschaft einer Entität, wie etwa einem Nutzer des mobilen Endgeräts. Im Zuge einer Authentifizierung wird beispielsweise ein entsprechender von dem Nutzer erbrachter Nachweis verifiziert. Die Entität führt durch ihren Beitrag zur Authentifizierung, d.h. durch Bereitstellen entsprechender Nachweise wie Authentifizierungsdaten bzw. Authentifizierungsfaktoren zur Prüfung, eine Authentisierung durch.

Eine Authentifizierung des Nutzers bezüglich der behaupteten Eigenschaft der Authentizität, beispielsweise der Authentizität seiner Person bzw. Identität, erlaubt es dem authentifizierten Nutzer weitere Aktionen durchzuführen. Beispielsweise werden dem Nutzer Zugangsrechte eingeräumt. Ein erfolgreich authentifizierter Nutzer gilt als authentisch. Eine abschließende Bestätigung einer Authentifizierung kann eine Autorisierung umfassen.

Der Nutzer kann sich auf verschiedene Weisen authentisieren. Er kann beispielsweise einen Nachweis einer Kenntnis, wie einer PIN oder einem Passwort, vorlegen, einen Nachweis eines Besitzes, wie etwa eines kryptographischen Schlüssels, eines Zertifikats oder eines elektronischen Geräts, und/oder einen Nachweis von Eigenschaften seiner Person selbst, wie biometrische Merkmale oder Verhaltensmerkmale. Beispielsweise wird der entsprechende Nachweis durch einen Authentifizierungssensor des mobilen Endgeräts in Form von Authentifizierungsdaten des Nutzers erfasst und von einem Sicherheitselement des mobilen Endgeräts mit einem oder mehreren hinterlegten Referenzwerten verglichen. Bei dem die erfassten Authentifizierungsdaten auswertenden Sicherheitselement handelt es sich beispielsweise um ein Sicherheitselement des Betriebssystems des mobilen Endgeräts. Im Falle einer ausreichenden Übereinstimmung zwischen den erfassten Authentifizierungsdaten und den hinterlegten Referenzwerten, bestätigt das Sicherheitselement eine erfolgreiche Authentifizierung des Nutzers. Beispielsweise umfasst eine Bestätigung der erfolgreichen Authentifizierung des Nutzers ein Ausführen eines Challenge-Response-Verfahrens durch das bestätigende Sicherheitselement. Beispielsweise bestätigt das bestätigende Sicherheitselement auf eine erfolgreiche Authentifizierung des Nutzers hin diese erfolgreiche Authentifizierung gegenüber einem weiteren Sicherheitselement, wie etwa dem entfernten Sicherheitselement mittels einer korrekten Response auf eine Challenge des entfernten Sicherheitselements.

Unter einem mobilen Endgerät wird ein mobiles tragbares Kommunikationsgerät, wie beispielsweise ein Smartphone, ein Tablet oder eine Smartwatch verstanden.

Unter einem Authentifizierungssensor wird ein Sensor zum Erfassen von Authentifizierungsdaten des Nutzers des mobilen Endgeräts verstanden. Die Authentifizierungsdaten können beispielsweise biometrische Daten des Nutzers umfassen. Der Authentifizierungssensor kann zum Erfassen biometrischer Daten des Nutzers konfiguriert sein. Biometrische Daten können beispielsweise umfassen: Fingerabdruckdaten, Körpergeometriedaten/Anthropometriedaten, wie etwa Gesichts-, Hand-, Ohrgeometriedaten, Handlinienstrukturdaten, Venenstrukturdaten, wie etwa Handvenenstrukturdaten, Irisdaten, Retinadaten, Stimmerkennungsdaten, Nagelbettmuster. Der Authentifizierungssensor kann beispielsweise eine Kamera des mobilen Endgeräts umfassen. Die Authentifizierungsdaten können beispielsweise ein Wissen des Nutzers umfassen, wie eine PIN oder Passwort. Der Authentifizierungssensor kann eine Eingabevorrichtung zur Eingabe von Authentifizierungsdaten, wie etwa eine PIN oder ein Passwort umfassen. Die Eingabevorrichtung kann beispielsweise eine Tastatur und/oder einen Touchscreen umfassen.

Ein Challenge-Response-Verfahren stellt ein sicheres Authentifizierungsverfahren einer ersten Instanz gegenüber einer zweiten Instanz auf Basis von Wissen dar. Beispielsweise wird das erste Sicherheitselement durch das Sicherheitsapplet des zweiten Sicherheitselements unter Verwendung eines Challenge-Response-Verfahrens authentifiziert. Gleichzeitig stellt die Response eine Bestätigung einer erfolgreichen Nutzerauthentifizierung dar, falls die Response nur unter der Voraussetzung einer erfolgreichen Nutzerauthentifizierung durch das erste Sicherheitselement erzeugt wird. Somit weiß das Sicherheitsapplet, im Falle eines erfolgreichen Challenge-Response-Verfahrens nicht nur, dass die Nutzerauthentifizierung bestätigt wurde, sondern dass diese durch das erste Sicherheitselement bestätigt wurde und somit valide ist.

Im Zuge eines Challenge-Response-Verfahren stellt eine erste Instanz einer zweiten Instanz eine Aufgabe ("Challenge"), für welche die zweite Instanz eine korrekte Antwort ("Response") liefern muss.

Beispielsweise erzeugt die erste Instanz eine Zufallszahl ("Nonce") und sendet diese an die zweite Instanz. Die zweite Instanz verwendet beispielsweise ein gemeinsames Geheimnis für eine kryptographische Transformation des Nonce und sendet das Resultat als Response zum Zwecke einer Authentifizierung der zweiten Instanz an die erste Instanz. Beispielsweise wird das Nonce mit dem gemeinsamen Geheimnis kombiniert und eine kryptographische Hashfunktion oder eine Verschlüsselung auf diese Kombination angewendet. Alternativer Weise kann das gemeinsame Geheimnis, etwa ein symmetrischer kryptographischer Schlüssel, zum Verschlüsseln des Nonce verwendet werden. Die erste Instanz, welche sowohl das Nonce als auch das gemeinsame Geheimnis kennt kann beispielsweise dieselbe Berechnung wie die zweite Instanz ausführen und/oder eine inverse Berechnung ausführen, z.B. das verschlüsselte Nonce unter Verwendung des gemeinsamen Geheimnisses wieder entschlüsseln. Stimmt das Ergebnis der Berechnung durch die erste Instanz mit dem Ergebnis der Berechnung der zweiten Instanz oder mit der Challenge überein, ist das Challenge-Response-Verfahren erfolgreich und die zweite Instanz erfolgreich authentifiziert.

Ferner kann ein Challenge-Response-Verfahren auch auf einem asymmetrischen Kryptosystem beruhen und dem Nachweis eines Besitzes eines privaten und damit geheimen kryptographischen Schlüssels durch die zweite Instanz gegenüber der ersten Instanz dienen. Dabei kennt nur die zweite Instanz den entsprechenden privaten kryptographischen Schlüssel, welchen sie für eine kryptographische Transformation der Challenge, e.g. eines Nonce, verwendet. Bei der entsprechenden kryptographischen Transformation kann es sich beispielsweise um ein digitales Signieren handeln. Die erste Instanz kann unter Verwendung eines dem privaten kryptographischen Schlüssel zugehörigen öffentlichen kryptographischen Schlüssels anhand der Response prüfen, ob die zweite Instanz tatsächlich über Kenntnis des privaten kryptographischen Schlüssels verfügt, ohne dass die erste Instanz im Zuge der Prüfung selbst Kenntnis von dem privaten kryptographischen Schlüssel erlangt.

Unter einem Sicherheitselement, auch "Secure Element" oder "SE" genannt, wird ein gesichertes Element eines mobilen Endgeräts verstanden, welches kryptographische Mittel bereitstellt. Diese kryptographischen Mittel sind gegen Manipulation geschützt und beispielsweise über kryptographische Schlüssel nur für autorisierte Dienste und Anwendungen zugänglich. Insbesondere können die kryptographischen Mittel beispielsweise nur durch autorisierte Dienste und Anwendungen in das Sicherheitselement eingebracht, ergänzt, verändert und/oder gelöscht werden. Ein Sicherheitselement bietet mithin eine manipulationssichere Plattform, beispielsweise implementiert in Form eines sicheren Ein-Chip-Mikrocontroller, auf welcher Applets und/oder vertrauliche und/oder kryptographische Daten gemäß vordefinierten Regeln und Sicherheitsanforderungen von zuverlässig identifizierten vertrauenswürdigen Instanzen gespeichert und so berechtigten Anwendungsprogrammen und/oder Betriebssystemen zur Verfügung gestellt werden können. Ein Sicherheitselement kann eingebettete oder integriert sein, beispielsweise zerstörungsfrei lösbar oder fest verbunden, d.h. nicht zerstörungsfrei lösbar, eingebracht sein. Das Sicherheitselement kann beispielweise eine SIM, UICC, SmartMicroSD, Smartcard, eSE, eSIM oder eUICC umfassen. Beispielsweise sind auf einem Sicherheitselement kryptographische Schlüssel gespeichert, d.h. das Sicherheitselement umfasst einen Datentresor für kryptographische Schlüssel bzw. einen "Key Store". Ein solcher Key-Store bzw. Sicherheitselement kann auch als Teil des Hauptprozessors implementiert sein, beispielsweise in einer TEE (Trusted Excecution Environment). Beispielsweise kann das erste Sicherheitselement unter Verwendung einer TEE implementiert sein. Sicherheitselemente sind beispielsweise als Hardware und/oder Firmware implementiert. Nach Ausführungsformen können Sicherheitselemente bzw. Key Stores auch als Software implementiert sein. Zwei Sicherheitselemente sind beispielsweise unabhängig voneinander, wenn es keine gemeinsame Instanz gibt, welche zugriffsberechtigt für beide Sicherheitselemente ist.

Ein Anwendungsprogramm, auch Applikation oder kurz App genannt, bezeichnet ein Computerprogramm, welches nicht systemtechnische Funktionalität bereitstellt, unterstützt und/oder deren Bearbeitung ermöglicht.

Unter einem Applet wird ein Computerprogramm verstanden, welches nicht als eigenständiges Anwendungsprogramm betrieben wird. Der Begriff "Applet" setzt sich aus den englischen Worten "Application", d.h. Anwendung bzw. Anwendungsprogramm und "Snippet", d.h. Schnipsel, zusammen.

Ein Betriebssystem bezeichnet ein Computerprogramm oder eine Zusammenstellung von Computerprogrammen, welche systemtechnische Funktionalitäten bereitstellen, unterstützen und/oder deren Bearbeitung ermöglichen. Durch ein Betriebssystem werden Systemressourcen zur Verfügung gestellt. Systemressourcen bezeichnen Systemelemente bzw. Hardwarekomponenten eines Computers, die von Prozessen zur korrekten Ausführung benötigt werden.

Bei einem Computer bzw. einem Computersystem kann es sich zum Beispiel um einen stationären Computer, wie etwa einen Personal Computer (PC), Serviceterminal oder einen Server, oder um einen mobilen tragbaren Computer, wie etwa einen Laptop, ein Tablet, ein Smartphone oder einen andern Smart Device, handeln. Der Computer kann eine Schnittstelle zur Verbindung mit dem Netzwerk umfassen, wobei es sich bei dem Netzwerk um ein privates oder öffentliches Netzwerk handeln kann, insbesondere das Internet. Je nach Ausführungsform kann diese Verbindung auch über ein Mobilfunknetz hergestellt werden.

Unter einem "Nutzer-Computersystem" wird hier ein Computersystem verstanden, auf welches der Nutzer Zugriff hat. Hierbei kann es sich zum Beispiel um einen Desktop-Computer (PC), ein Serviceterminal, oder ein mobiles tragbares Kommunikationsgerät, wie etwa ein Laptop, ein Tablet, ein Smartphone oder einen anderen Smart Device handeln.

Unter einem "Dienst-Server" wird hier ein Server bzw. ein Computersystem verstanden, auf welchem ein Serverprogramm ausgeführt wird und das die Möglichkeit bereitstellt einen angebotenen Dienst über ein Netzwerk zu initiieren bzw. in Anspruch zu nehmen und/oder auszuführen.

Unter einem "Programm" bzw. "Programminstruktionen" wird hier ohne Einschränkung jede Art von Computerprogramm verstanden, welches maschinenlesbare Instruktionen zur Steuerung einer Funktionalität des Computers umfasst.

Unter einem "Prozessor" wird hier und im Folgenden eine Logikschaltung verstanden, die zur Ausführung von Programminstruktionen dient. Die Logikschaltung kann auf einem oder mehreren diskreten Bauelementen implementiert sein, insbesondere auf einem Chip. Insbesondere wird unter einem "Prozessor" ein Mikroprozessor oder ein Mikroprozessorsystem aus mehreren Prozessorkernen und/oder mehreren Mikroprozessoren verstanden. Unter einem "Speicher" werden hier sowohl flüchtige als auch nicht flüchtige elektronische Speicher bzw. digitale Speichermedien verstanden.

Unter einem "nichtflüchtigen Speicher" wird hier ein elektronischer Speicher zur dauerhaften Speicherung von Daten, insbesondere von statischen kryptographischen Schlüsseln, Attributen oder Kennungen, verstanden. Ein nichtflüchtiger Speicher kann als nichtänderbarer Speicher konfiguriert sein, der auch als Read-Only Memory (ROM) bezeichnet wird, oder als änderbarer Speicher, der auch als Non-Volatile Memory (NVM) bezeichnet wird. Insbesondere kann es sich hierbei um ein EEPROM, beispielsweise ein Flash-EEPROM, kurz als Flash bezeichnet, handeln. Ein nichtflüchtiger Speicher zeichnet sich dadurch aus, dass die darauf gespeicherten Daten auch nach Abschalten der Energieversorgung erhalten bleiben.

Unter einer "Schnittstelle" bzw. "Kommunikationsschnittstelle" wird hier eine Schnittstelle verstanden, über die Daten empfangen und gesendet werden können, wobei die Kommunikationsschnittstelle kontaktbehaftet oder kontaktlos konfiguriert sein kann. Eine Kommunikationsschnittstelle kann beispielsweise eine Kommunikation über ein Netzwerk ermöglichen. Je nach Konfiguration kann eine Kommunikationsschnittstelle beispielsweise eine kabellose Kommunikation nach einem Mobilfunkstandard, Bluetooth-, RFID-, WiFi und/oder NFC-Standard bereitstellen. Je nach Konfiguration kann eine Kommunikationsschnittstelle beispielsweise eine kabelbasierte Kommunikation bereitstellen. Bei der Kommunikationsschnittstelle kann es sich um eine interne Schnittstelle oder um eine externe Schnittstelle handeln.

Bei den verschlüsselten Kommunikationskanälen handelt es sich beispielsweise um verschlüsselte Ende-zu-Ende-Verbindungen. Unter einer "verschlüsselten Ende-zu-Ende-Verbindung" bzw. einem "verschlüsselten Ende-zu-Ende-Übertragungskanal" wird hier eine Verbindung zwischen einem Sender und einem Empfänger mit einer Ende-zu-Ende-Verschlüsslung verstanden, bei der zu übertragende Daten vom Sender verschlüsselt und erst vom Empfänger wieder entschlüsselt werden. Die Verschlüsselung übertragener Daten erfolgt somit über alle Übertragungsstationen hinweg, sodass Zwischenstationen aufgrund der Verschlüsslung keine Kenntnis vom Inhalt der übertragenen Daten erlangen können. Die Verbindung wird durch die Verschlüsselung kryptographisch abgesichert, um ein Ausspähen und/oder eine Manipulation der Übertragung zu verhindern, wobei hierzu ein sogenanntes Secure-Messaging-Verfahren eingesetzt werden kann. Eine Ende-zu-Ende-Verschlüsslung beruht beispielsweise auf zwei symmetrischen kryptographischen Schlüsseln, wobei ein erster der symmetrischen Schlüssel zum Verschlüsseln von Nachrichten und ein zweiter der symmetrischen Schlüssel zum Authentifizieren des Senders der Nachricht, etwa mittels Message Authentication Code (MAC)-Algorithmen, dient. Beispielsweise werden für einen verschlüsselten Kommunikationskanal im Zuge des Aufbaus ephemere Schlüssel zur Verschlüsselung ausgehandelt, welche mit einer Beendigung des Kommunikationskanals ihre Gültigkeit verlieren. Eine Verwendung unterschiedlicher ephemerer Schlüssel für unterschiedliche Kommunikationskanäle ermöglicht es eine Mehrzahl von Kommunikationskanälen parallel zueinander zu betreiben.

Ein verschlüsselter Kommunikationskanal kann beispielsweise unter Verwendung des Transport Layer Security (TLS) Protokolls aufgebaut werden, beispielsweise als Teil des Hypertext Transfer Protocol Secure (HTTP) Protokolls.

Asymmetrische Schlüsselpaare werden für eine Vielzahl von Kryptosystemen eingesetzt und spielen bei der sicheren Übertragung elektronischer Daten eine wichtige Rolle. Ein asymmetrisches Schlüsselpaar besteht aus einem öffentlichen Schlüssel, welcher zur Ver- und/oder Entschlüsselung von Daten verwendet wird und an Dritte, beispielsweise an einen Sender oder Empfänger von Daten, weitergegeben werden darf, sowie einem privaten Schlüssel, welcher zur Ver- und/oder Entschlüsselung aber auch zur Signatur von Daten verwendet wird und im Regelfall geheim gehalten werden muss. Der öffentliche Schlüssel ermöglicht es jedermann Daten für den Inhaber des privaten Schlüssels zu verschlüsseln oder mit dem privaten Schlüssel erstellte digitale Signaturen zu prüfen. Ein privater Schlüssel ermöglicht es seinem Inhaber mit dem öffentlichen Schlüssel verschlüsselte Daten zu entschlüsseln oder digitale Signaturen von Daten zu erstellen.

Eine digitale Signatur von Daten umfasst beispielsweise ein Bilden eines Prüfwerts der Daten, wie etwa eines Hashwerts, welcher mit einem als Signaturschlüssel verwendeten privaten kryptographischen Schlüssel eines asymmetrischen Schlüsselpaars verschlüsselt wird. Im Falle einer Signatur kennt nur der Signierende den zum Erstellen der Signatur verwendeten privaten kryptographischen Schlüssel, d.h. Signaturschlüssel, des für die Signatur verwendeten asymmetrischen Schlüsselpaars. Der Signaturempfänger verfügt lediglich über den öffentlichen Schlüssel, d.h. Signaturprüfschlüssel, des für die Signatur verwendeten asymmetrischen Schlüsselpaars. Der Signaturempfänger kann die Signatur mithin prüfen, aber nicht selbst berechnen. Für eine Signaturprüfung berechnet der Signaturempfänger beispielsweise den Prüfwert der signierten Daten und vergleicht diesen mit dem Ergebnis einer Entschlüsselung der Signatur unter Verwendung des Signaturprüfschlüssels. Stimmt der berechnet Hashwert mit dem Ergebnis der Entschlüsselung überein ist die Signatur korrekt. Wird zudem die Authentizität des Signaturprüfschlüssels, etwa durch ein Zertifikat, insbesondere ein PKI-Zertifikat, bestätigt, ist die Signatur valide.

Unter einem "Zertifikat" wird hier ein digitales Zertifikat verstanden, welches auch als Public-Key-Zertifikat (PKI-Zertifikat) bezeichnet wird. Bei einem Zertifikat handelt es sich um strukturierte Daten, die dazu dienen, einen öffentlichen Schlüssel eines asymmetrischen Kryptosystems einer Identität, wie zum Beispiel einer Person, Institution oder einer Vorrichtung, zuzuordnen. Zur kryptographischen Sicherung und zum Nachweis der Authentizität der Daten des Zertifikates, sind diese von einem Zertifikatsaussteller signiert. Durch PKI-Zertifikate, welche auf asymmetrischen Schlüsselpaaren basieren, und bis auf ein Root- bzw. Wurzelzertifikat jeweils von einem Zertifikatsaussteller mit einem Signaturschlüssel signiert sind, dessen zugehöriger Signaturprüfschlüssel dem Zertifikatsaussteller durch ein PKI-Zertifikat des entsprechenden Zertifikataussteller zugeordnet ist, wird eine so genannte Public Key Infrastructure (PKI) realisiert. Beispielsweise kann das Zertifikat dem Standard X.509 oder einem anderen Standard entsprechen. Beispielsweise handelt es sich bei dem Zertifikat um ein Card Verifiable Certificate (CVC). Ein Berechtigungszertifikat umfasst strukturierte Daten, welche zusätzlich Rechte der Identität definieren.

Die PKI stellt ein System zum Ausstellen, Verteilen und Prüfen digitaler Zertifikate bereit. Ein digitales Zertifikat kann in einem asymmetrischen Kryptosystem die Authentizität eines öffentlichen kryptographischen Schlüssels und seinen zulässigen Anwendungs- und Geltungsbereich bestätigen. Das digitale Zertifikat ist selbst durch eine digitale Signatur geschützt, deren Echtheit bzw. Authentizität mit dem öffentlichen Schlüssel des Ausstellers des Zertifikates geprüft werden kann. Um die Authentizität des Ausstellerschlüssels zu prüfen, wird wiederum ein digitales Zertifikat verwendet. Auf diese Weise lässt sich eine Kette von digitalen Zertifikaten aufbauen, die jeweils die Authentizität des öffentlichen Schlüssels bestätigen, mit dem das vorhergehende Zertifikat geprüft werden kann. Eine solche Kette von Zertifikaten bildet einen sogenannten Validierungspfad oder Zertifizierungspfad. Auf die Echtheit des letzten Zertifikats, des sogenannten Wurzelzertifikats, und des dadurch zertifizierten Schlüssels, müssen sich die Teilnehmer der PKI beispielsweise ohne ein weiteres Zertifikat verlassen können. Das Wurzelzertifikat wird von einer sogenannten Wurzelzertifizierungsinstanz verwaltet, auf deren als gesichert vorausgesetzten Authentizität die Authentizität aller Zertifikate der PKI zurückgeht.

Digitale Zertifikate werden beispielsweise durch eine unabhängige, glaubwürdige Instanz (Zertifizierungsdienstanbieter/ZDA oder Vertrauensdienstanbieter/VDA), d.h. die das Zertifikat zuteilende Zertifizierungsstelle, bestätigen. Zertifikate können einem breiten Personenkreis zur Verfügung gestellt werden, um diesem eine Prüfung elektronischer Signaturen auf Authentizität und Gültigkeit zu ermöglichen. Ein Zertifikat kann einer elektronischen Signatur zugeordnet sein und einen Signaturprüfschlüssel in Form des öffentlichen Schlüssels bereitstellen, wenn der zu dem Signaturprüfschlüssel gehörende private Schlüssel als Signaturschlüssel verwendet wurde. Dadurch, dass ein ZDA /VDA ein Zertifikat in Assoziation mit einem öffentlichen Schlüssel der Allgemeinheit zur Verfügung stellt, ermöglicht sie es den Nutzern asymmetrischer Kryptosysteme den öffentlichen Schlüssel einer Identität, beispielsweise einer Person, einer Organisation, oder Computersystem, zuzuordnen.

Nach Ausführungsformen kann die elektronische Identität eine offiziell anerkannte Identität, wie zum Beispiel eine auf Grundlage eines offiziellen Ausweisdokuments, etwa eines Personalausweises oder Reisepasses, erstellte elektronische Identität umfassen.

Die elektronische Identität eines Nutzers ist eindeutig, d.h. einzigartig und unverwechselbar. Sie wird auf der Grundlage von Merkmalen, sog. Identitätsattributen, definiert. Eine elektronische Identität umfasst beispielsweise personenbezogenen Daten. Personenbezogene Daten bezeichnen Daten, welche eine Identifikation einer Person ermöglichen oder einer Person zuordenbar sind, auf welche die personenbezogenen Daten bezogen sind.

Ein Nutzer kann über eine Mehrzahl von unterschiedlichen, anwendungsspezifischen elektronischen Identitäten verfügen. Diese elektronischen Identitäten können unterschiedlichen Sicherheitsanforderungen entsprechen.

Nach Ausführungsformen kann eine auf dem mobilen Endgerät gespeicherte und von dem ID-Anwendungsprogramm bereitgestellte bzw. verwaltete elektronische Identität ohne zusätzliche Hardware neben dem mobilen Endgerät zur Identifizierung und Authentifizierung des Nutzers des mobilen Endgeräts verwendet werden.

Identitätsattribute werden beispielsweise von Service-Providern bzw. Dienstanbietern für Online-Dienste nachgefragt. Nach Ausführungsformen erfolgt eine Übertragung der von einem Dienstanbieter für seinen Online-Dienst benötigten Identitätsattribute verschlüsselt und authentisch. Beispielsweise wird unter Verwendung von Berechtigungszertifikaten geregelt, wer auf welche Identitätsattribute zugreifen darf bzw. eine Leseberechtigung für diese besitzt. Beispielsweise werden die benötigten Identitätsattribute von einem dazu mittels Berechtigungszertifikat berechtigten ID-Provider ausgelesen und dem anfragenden Dienstanbieter zur Verfügung gestellt. Nach Ausführungsformen stellt der ID-Provider dem anfragenden Dienstanbieter nur eine Bestätigung des oder der angefragten Identitätsattribute zur Verfügung.

Eine Zustimmung des Nutzers zur Verwendung der Identitätsattribute und/oder eine Nutzerauthentifizierung erfolgt beispielsweise unter Prüfung ein oder mehrerer Authentifizierungsfaktoren, wie etwa Passwort, PIN, Fingerabdruck oder Gesichtserkennung.

Nach Ausführungsformen umfasst das Senden der unter Verwendung des ephemeren symmetrischen kryptographischen Schlüssels verschlüsselten auszulesenden Identitätsattribute an das auslesende Computersystem ein Senden an die Applikation zum Weiterleiten an das auslesende Computersystem.

Ausführungsformen können den Vorteil haben, dass die Kommunikation zwischen dem Server und dem auslesenden Computersystem über die Applikation bzw. das mobile Endgerät erfolgt. Dabei leitet das mobile Endgerät bzw. die Applikation Nachrichten zwischen dem auslesenden Computersystem und dem Server weiter. Umfassen die entsprechenden Nachrichten beispielsweise verschlüsselte Identitätsattribute, welche unter Verwendung eines ephemeren kryptographischen Schlüssels verschlüsselt sind, welcher nur dem Server bzw. dem von dem Server bereitgestellten Sicherheitselement einerseits und dem auslesenden Computersystem andererseits bekannt sind, kann eine Ende-zu-Ende-Verschlüsselung zwischen dem Server und dem auslesenden Computersystem implementiert werden.

Nach Ausführungsformen handelt es sich bei dem der elektronischen Identität zugeordneten kryptographischen Schlüssel um einen symmetrischen kryptographischen Schlüssel, welcher in dem entfernten Sicherheitselement gespeichert ist.

Nach Ausführungsformen handelt es sich bei dem der elektronischen Identität zugeordneten kryptographischen Schlüssel um einen öffentlichen kryptographischen Schlüssel eines asymmetrischen Schlüsselpaars. Ein privater Schlüssel des asymmetrischen Schlüsselpaars ist in dem entfernten Sicherheitselement gespeichert.

Ausführungsformen können den Vorteil haben, dass eine symmetrische Verschlüsselung eine effiziente und effektive Verschlüsselung ermöglicht. Ist der bzw. sind die symmetrischen kryptographischen Schlüssel in Sicherheitselementen gespeichert, so können diese effizient und effektiv vor unberechtigten Zugriffen geschützt werden.

Nach Ausführungsformen umfasst das Verfahren ferner ein Erzeugen des mit dem auslesenden Computersystem geteilten ephemeren symmetrischen kryptographischen Schlüssels.

Ausführungsformen können den Vorteil haben, dass der Server bzw. das von dem Server bereitgestellte entfernte Sicherheitselement den für die verschlüsselte Kommunikation mit dem auslesenden Computersystem notwendigen ephemeren symmetrischen kryptographischen Schlüssel erzeugen kann. Bei dem ephemeren symmetrischen kryptographischen Schlüssel handelt es sich beispielsweise um einen sitzungsspezifischen symmetrischen kryptographischen Schlüssel, welche einer Sitzung zugeordnet ist. Soll eine neue Sitzung gestartet werden, so muss beispielsweise ein neuer ephemerer kryptographischer Schlüssel erzeugt werden.

Nach Ausführungsformen erzeugt das entfernte Sicherheitselement den ephemeren symmetrischen kryptographischen Schlüssel unter Verwendung eines mit dem auslesenden Computersystem geteilten Geheimnisses und einer ersten Zufallszahl.

Ausführungsformen können den Vorteil haben, dass ein effektives und effizientes Verfahren zum Erzeugen des ephemeren symmetrischen kryptographischen Schlüssels bereitgestellt werden kann. Da die Erzeugung des ephemeren symmetrischen kryptographischen Schlüssels auf einem mit dem auslesenden Computersystem geteilten Geheimnis beruht, kann der entsprechende kryptographische Schlüssel beispielsweise effektiv und effizient vor Zugriffen unberechtigter Dritter geschützt werden. Zum Erzeugen des entsprechenden Schlüssels ist eine Kenntnis des geteilten Geheimnisses notwendig.

Nach Ausführungsformen setzt das Erzeugen des mit dem auslesenden Computersystem geteilten ephemeren symmetrischen kryptographischen Schlüssels ein erfolgreiches Authentisieren der elektronischen Identität gegenüber dem auslesenden Computersystem unter Verwendung des entfernten Sicherheitselements voraus.

Ausführungsformen können den Vorteil haben, dass durch die Authentisierung der elektronischen Identität gegenüber dem auslesenden Computersystem sichergestellt werden kann, dass die entsprechenden Identitätsattribute der korrekten elektronischen Identität ausgelesen werden. Das Authentisieren erfolgt dabei unter Verwendung des entfernten Sicherheitselements, welches von dem Server bereitgestellt wird. Auf den entfernten Sicherheitselement ist beispielsweise ein privater kryptographischer Schlüssel eines der elektronischen Identität zugeordneten asymmetrischen Schlüsselpaars gespeichert. Dieser private kryptographische Schlüssel wird beispielsweise zum Authentifizieren der elektronischen Identität gegenüber dem auslesenden Computersystem verwendet.

Nach Ausführungsformen umfasst das Authentisieren der elektronischen Identität gegenüber dem auslesenden Computersystem durch den Server:

- Senden eines öffentlichen kryptographischen Schlüssels eines der elektronischen Identität zugeordneten asymmetrischen Schlüsselpaars an das auslesende Computersystem, wobei ein privater kryptographischen Schlüssel des asymmetrischen Schlüsselpaars in dem entfernten Sicherheitselement gespeichert ist,
- Berechnen des mit dem auslesenden Computersystem geteilten Geheimnisses durch das entfernte Sicherheitselement unter Verwendung des privaten kryptographischen Schlüssels der elektronischen Identität und eines ephemeren öffentlichen kryptographischen Schlüssels des auslesenden Computersystems,
- Erzeugen der ersten Zufallszahl durch das entfernte Sicherheitselement,
- Erzeugen eines gemeinsamen ephemeren Authentisierungsschlüssels zum Authentisieren von Informationen im Zuge von Kommunikationen gegenüber dem auslesenden Computersystem unter Verwendung des geteilten Geheimnisses und der erzeugten ersten Zufallszahl,
- Erzeugen eines Authentisierungstoken durch das entfernte Sicherheitselement unter Verwendung des ephemeren Authentisierungsschlüssels und des ephemeren öffentlichen kryptographischen Schlüssels des auslesenden Computersystems zum Authentisieren der elektronischen Identität gegenüber dem auslesenden Computersystem,

- Senden der ersten Zufallszahl zusammen mit dem Authentisierungstoken zum Authentisieren der elektronischen Identität gegenüber dem auslesenden Computersystem an das auszulesende Computersystem.

Ausführungsformen können den Vorteil haben, dass die entsprechenden Applikationen gegenüber dem auslesenden Computersystem authentisiert werden können, beispielsweise unter Verwendung der in den Sicherheitselementen installierten Applets der Applikationen, welche die elektronischen Identitäten verwalten. Das auslesende Computersystem empfängt den öffentlichen kryptographischen Schlüssel in der Applikation und kann unter Verwendung dieses öffentlichen kryptographischen Schlüssels sowie eines ephemeren zweiten privaten kryptographischen Schlüssels des den ephemeren zweiten öffentlichen kryptographischen Schlüssel umfassenden asymmetrischen Schlüsselpaars ebenfalls das geteilte Geheimnis berechnen. Auf den Empfang der Zufallszahl hin kann das auslesende Computersystem ebenfalls den gemeinsamen Authentifizierungsschlüssel berechnen. Unter Verwendung des so berechneten Authentifizierungsschlüssels und der empfangenen Zufallszahl kann das auslesende Computersystem den empfangenen Authentisierungstoken validieren. Stimmt beispielsweise ein von dem auslesenden Computersystem unter Verwendung des berechneten Authentisierungsschlüssels und der empfangenen Zufallszahl berechnetes Authentisierungstoken mit dem empfangenen Authentisierungstoken überein, weist das auslesende Computersystem, dass sich die Applikation tatsächlich im Besitz des entsprechenden privaten kryptographischen Schlüssels des der Applikation zugeordneten asymmetrischen Schlüsselpaars befindet. Mithin ist die Applikation authentifiziert.

Das entfernte Sicherheitselement verwaltet den privaten kryptographischen Schlüssel für die elektronische Identität bzw. verwahrt diesen sicher. Unter Verwendung des von dem entfernten Sicherheitselement verwahrten privaten kryptographischen Schlüssels der elektronischen Identität wird der Authentisierungstoken erzeugt und dem auslesenden Computersystem zum Authentisieren der elektronischen Identität zur Verfügung gestellt. Anhand des Authentisierungstokens kann das auslesende Computersystem prüfen, ob die elektronische Identität über den entsprechenden privaten kryptographischen Schlüssel verfügt bzw. Zugriff auf diesen hat. Falls dies der Fall ist, gilt die elektronische Identität als authentifiziert.

Nach Ausführungsformen wird der ephemere symmetrische kryptographische Schlüssel durch das entfernte Sicherheitselement zusammen mit dem ephemeren Authentisierungsschlüssels berechnet.

Nach Ausführungsformen umfasst das Senden des öffentlichen kryptographischen Schlüssels der elektronischen Identität an das auslesende Computersystem ein Senden an die Applikation zum Weiterleiten an das auslesende Computersystem.

Ausführungsformen können den Vorteil haben, dass die Kommunikation zwischen dem Server und dem auslesenden Computersystem über das mobile Endgerät erfolgt. Dabei leitet das mobile Endgerät bzw. die Applikation Nachrichten zwischen dem auslesenden Computersystem und dem Server weiter. Umfassen die entsprechenden Nachrichten beispielsweise verschlüsselte Identitätsattribute, welche unter Verwendung eines ephemeren kryptographischen Schlüssels verschlüsselt sind, welcher nur dem Server bzw. dem von dem Server bereitgestellten Sicherheitselement einerseits und dem auslesenden Computersystem andererseits bekannt sind, kann eine Ende-zu-Ende-Verschlüsselung zwischen dem Server und dem auslesenden Computersystem implementiert werden.

Ausführungsformen können den Vorteil haben, dass die Kommunikation zwischen dem Server und dem auslesenden Computersystem über die Applikation bzw. das mobile Endgerät erfolgt. Dabei leitet das mobile Endgerät bzw. die Applikation Nachrichten zwischen dem auslesenden Computersystem und dem Server weiter. Im Zuge dieser Kommunikation wird beispielsweise der öffentliche kryptographische Schlüssel der elektronischen Identität von dem Server bzw. dem entfernten Sicherheitselement an das auslesende Computersystem über die Applikation bzw. das mobile Endgerät gesendet. Nur der entsprechende öffentliche kryptographische Schlüssel ermöglicht es dem auslesenden Computersystem die elektronische Identität zu authentifizieren.

Nach Ausführungsformen wird der öffentliche kryptographische Schlüssel zusammen mit einem Zertifikat an das auslesende Computersystem gesendet. Nach Ausführungsformen hat das auslesende Computersystem Zugriff auf ein Zertifikat, beispielsweise ist das Zertifikat in einem Speicher des auslesenden Computersystems gespeichert oder das Zertifikat ist von einem online zugänglichen Register abrufbar.

Nach Ausführungsformen umfasst das Senden der ersten Zufallszahl zusammen mit dem Authentisierungstoken an das auslesende Computersystem ein Senden an die Applikation zum Weiterleiten an das auslesende Computersystem.

Ausführungsformen können den Vorteil haben, dass die Kommunikation zwischen dem Server und dem auslesenden Computersystem über die Applikation bzw. das mobile Endgerät erfolgt. Dabei leitet das mobile Endgerät bzw. die Applikation Nachrichten zwischen dem auslesenden Computersystem und dem Server weiter. Beispielsweise wird die erste Zufallszahl zusammen mit dem Authentisierungstoken zum Authentisieren der elektronischen Identität über die Applikation bzw. das mobile Endgerät an das auslesende Computersystem gesendet.

Nach Ausführungsformen setzt das Authentisieren der elektronischen Identität gegenüber dem auslesenden Computersystem ein erfolgreiches Authentifizieren des auslesenden Computersystems durch die Applikation voraus.

Ausführungsformen können den Vorteil haben, dass eine Authentifizierung des auslesenden Computersystems durch die Applikation, d.h. das mobile Endgerät, erfolgen kann. Durch das Authentifizieren des auslesenden Computersystems kann einerseits das auslesende Computersystem authentifiziert werden und andererseits können Zugriffsrechte des auslesenden Computersystems auf die auszulesenden Identitätsattribute validiert werden. Ist das auslesende Computersystem erfolgreich authentifiziert, bedeutet dies, dass es beispielsweise die Berechtigung besitzt, angefragte Identitätsattribute auszulesen. Im Zuge des Authentifizierens des auslesenden Computersystems wird beispielsweise der ephemere öffentliche kryptographische Schlüssel des auslesenden Computersystems von dem mobilen Endgerät empfangen und dem Server bzw. entfernen Sicherheitselement zur Verfügung gestellt.

Nach Ausführungsformen empfängt der Server den ephemeren öffentlichen kryptographischen Schlüssel des auslesenden Computersystems von der Applikation, welche den ephemeren öffentlichen kryptographischen Schlüssel im Zuge des Authentifizierens des auslesenden Computersystems empfängt und an den Server weiterleitet.

Ausführungsformen können den Vorteil haben, dass die Applikation bzw. das mobile Endgerät dem Server den ephemeren öffentlichen kryptographischen Schlüssel zur Verfügung stellt.

Nach Ausführungsformen empfängt der Server in Antwort auf das Senden des der elektronischen Identität zugeordneten öffentlichen kryptographischen Schlüssels von dem auslesenden Computersystem eine zweite Kopie des ephemeren öffentlichen kryptographischen Schlüssels des auslesenden Computersystems, welche der Server mit der ersten Kopie des ephemeren öffentlichen kryptographischen Schlüssels des auslesenden Computersystems vergleicht, welche die Applikation im Zuge des Authentifizierens des auslesenden Computersystems empfangen und an den Server weitergeleitet hat. Eine Übereinstimmung beider Kopien ist eine Voraussetzung für das Berechnen des geteilten Geheimnisses.

Ausführungsformen können den Vorteil haben, dass unter Verwendung der zweiten Kopie des ephemeren öffentlichen kryptographischen Schlüssels des auslesenden Computersystems seitens des Servers geprüft werden kann, ob es sich beim auslesenden Computersystem, gegenüber dem das Authentisieren der elektronischen Identität ausgeführt wird, um dasselbe auslesende Computersystem handelt, welches zuvor durch die Applikation bzw. das mobile Endgerät authentifiziert wurde.

Nach Ausführungsformen umfasst das Verfahren ferner ein Berechnen eines Prüfcodes der entschlüsselten auszulesenden Identitätsattribute unter Verwendung des ephemeren Authentisierungsschlüssel, welcher zusammen mit den unter Verwendung des ephemeren symmetrischen kryptographischen Schlüssels verschlüsselten auszulesenden Identitätsattribute an das auslesende Computersystem gesendet wird.

Ausführungsformen können den Vorteil haben, dass anhand des Prüfcodes die Authentizität der verschlüsselten auszulesenden Identitätsattribute für das auslesende Computersystem nachgewiesen werden kann. Denn das ausführende Computersystem verfügt beispielsweise ebenfalls über den entsprechend ephemeren Authentisierungsschlüssel, mithilfe dessen der Prüfcode validiert werden kann.

Nach Ausführungsformen handelt es sich bei dem ephemeren Authentisierungsschlüssel um einen Schlüssel zum Erzeugen eines Message Authentication Codes. Bei dem Prüfcode handelt es sich um einen unter Verwendung des ephemeren Authentisierungsschlüssels erzeugten MAC-Code der auszulesenden Identitätsattribute.

Die Authentizität der übertragen Identitätsattribute kann beispielsweise durch Verwendung eines Message Authentication Codes (MAC) sichergestellt werden. Ein MAC wird beispielsweise unter Verwendung eines MAC-Algorithmus berechnet, welchem zu schützende Daten, d.h. die Identitätsattribute, und ein kryptographischer Schlüssel, beispielsweise ein symmetrischer kryptographischer Schlüssel, als Eingabedaten zur Verfügung gestellt werden. Unter Verwendung dieser Eingabedaten berechnet der MAC-Algorithmus eine Prüfsumme, welche als MAC dient. Zum Berechnen von MACs können beispielsweise Blockchiffren oder Hash-Funktionen verwendet werden. Als MAC kann beispielsweise ein HMAC (Keyed-Hash Message Authentication Code) verwendet werden, für dessen Konstruktion eine kryptographische Hash-Funktion, wie beispielsweise der Secure Hash Algorithm (SHA), und ein geheimer kryptographischer Schlüssel, beispielsweise ein symmetrischer kryptographischer Schlüssel, verwendet wird.

Zur Sicherung einer Datenübertragung, beispielsweise einer Übertragung von Identitätsattributen, wird zwischen Sender, beispielsweise das Applet, und Empfänger, beispielsweise einem auslesenden Computersystem, ein kryptographischer Schlüssel, beispielsweise ein symmetrischer kryptographischer Schlüssel, vereinbart. Der Sender verwendet diesen kryptographischen Schlüssel zum Berechnen eines MACs der zu übertragenden Daten und sendet den berechneten MAC zusammen mit den zu übertragenden Daten an den Empfänger. Der Empfänger berechnet seinerseits einen MAC für die empfangenen Daten unter Verwendung des kryptographischen Schlüssels und vergleicht das Ergebnis mit dem empfangenen MAC. Im Falle einer Übereinstimmung zwischen berechnetem MAC und empfangenen MAC berechnet ist die Integritätsprüfung erfolgreich und die empfangenen Daten werden als authentisch angesehen.

Im Falle eines MAC müssen sowohl Sender als auch Empfänger Kenntnis von dem verwendeten kryptographischen Schlüssel haben im Gegensatz zu einer Verwendung von reinen Hashfunktionen oder von Signaturen. Im Falle von reinen Hashfunktionen kommen beispielsweise keine kryptographischen Schlüssel zum Einsatz. Falls die Hashfunktionen öffentlich sind, kann jeder den Hashwert berechnen, insbesondere für manipulierte Nachrichten. Im Falle einer Signatur kennt nur der Signierende den zum Erstellen der Signatur verwendeten privaten kryptographischen Schlüssel, d.h. Signaturschlüssel, eines für die Signatur verwendeten asymmetrischen Schlüsselpaars. Der Signaturempfänger verfügt lediglich über den öffentlichen Schlüssel, d.h. Signaturprüfschlüssel, des für die Signatur verwendeten asymmetrischen Schlüsselpaars. Der Signaturempfänger kann die Signatur mithin prüfen unter Verwendung des Signaturprüfschlüssels, aber nicht selbst berechnen.

Nach Ausführungsformen handelt es sich bei dem Authentisierungstoken um einen unter Verwendung des ephemeren Authentisierungsschlüssels erzeugten MAC-Code der ersten Zufallszahl.

Nach Ausführungsformen setzt das Authentisieren der elektronischen Identität gegenüber dem auslesenden Computersystem ferner ein erfolgreiches Authentifizieren der Applikation durch den Server voraus.

Ausführungsformen können den Vorteil haben, dass unter Verwendung der Authentifizierung der Applikation und durch den Server sichergestellt werden kann, dass die Kommunikation tatsächlich mit der entsprechenden Applikation erfolgt.

Nach Ausführungsformen umfasst das Authentifizieren durch den Server:

- Empfangen einer Challenge-Anfrage von der Applikation,
- Erzeugen einer zweiten Zufallszahl als Challenge durch das entfernte Sicherheitselement,
- Senden der erzeugten Challenge in Antwort auf die Challenge-Anfrage an die Applikation,
- Empfangen einer Response in Antwort auf das Senden der Challenge, wobei es sich bei der Response um die unter Verwendung eines der elektronischen Identität zugeordneten symmetrischen kryptographischen Schlüssels verschlüsselte Challenge handelt,
- Validieren der Response durch das entfernte Sicherheitselement unter Verwendung des der elektronischen Identität zugeordneten symmetrischen kryptographischen Schlüssels, der in dem entfernten Sicherheitselement gespeichert ist.

Ausführungsformen können den Vorteil haben, dass unter Verwendung des Challenge-Response-Verfahrens sichergestellt werden kann, dass es sich bei der Applikation tatsächlich um die die entsprechende elektronische Identität verwaltende Applikation handelt. Bei dem der elektronischen Identität zugeordneten symmetrischen kryptographischen Schlüssel, welcher von den mobilen Endgeräten zur Verschlüsselung der Challenge verwendet wird, handelt es sich beispielsweise um einen symmetrischen kryptographischen Schlüssel, welcher in einem Sicherheitselement des Betriebssystems des mobilen Endgeräts gespeichert ist.

Nach Ausführungsformen umfasst das Validieren der Response ein Entschlüsseln der Response durch das entfernte Sicherheitselement unter Verwendung des der elektronischen Identität zugeordneten symmetrischen kryptographischen Schlüssels und ein Vergleichen des Ergebnisses mit der gesendeten Challenge, welche das entfernte Sicherheitselement erzeugt hat. Im Falle einer Übereinstimmung ist das Validieren erfolgreich.

Nach Ausführungsformen umfasst das Validieren der Response ein Verschlüsseln der gesendeten Challenge, welche das entfernte Sicherheitselement erzeugt hat, durch das entfernte Sicherheitselement unter Verwendung des der elektronischen Identität zugeordneten symmetrischen kryptographischen Schlüssels und ein Vergleichen des Ergebnisses mit der Response Challenge. Im Falle einer Übereinstimmung ist das Validieren erfolgreich.

Nach Ausführungsformen setzt das Erzeugen der Response durch die Applikation ein erfolgreiches Authentifizieren des Nutzers durch das mobile Endgerät voraus.

Ausführungsformen können den Vorteil haben, dass durch das Challenge-Response-Verfahren nicht nur die Applikation authentifiziert werden kann, sondern ferner auch der Nutzer des mobilen Endgeräts. Mit anderen Worten kann somit sichergestellt werden, dass ein berechtigter Nutzer das mobile Endgerät nutzt und der Übertragung der Identitätsattribute an das auslesende Computersystem explizit zustimmt. Hierfür werden beispielsweise Authentifizierungsdaten des aktuellen Nutzers durch ein oder mehrere Sensoren des mobilen Endgeräts erfasst. Bei den entsprechenden Authentifizierungsdaten handelt es sich beispielsweise um eine PIN des Nutzers, biometrische Daten des Nutzers, wie etwa ein Fingerabdruck oder ein Gesichtsbild, oder verhaltensbasierte Daten, wie beispielsweise grobmotorische Bewegungsdaten der Bewegungen des mobilen Endgeräts, welches der Nutzer mit sich trägt. Die entsprechenden Authentifizierungsdaten werden an das Sicherheitselement des Betriebssystems gesendet, welches diese mit den gespeicherten Referenzdaten, die im Zuge der Personalisierung des mobilen Endgeräts in dem Sicherheitselement des Betriebssystems hinterlegt wurden, vergleicht. Bei einer ausreichenden Übereinstimmung zwischen den erfassten Authentifizierungsdaten und den hinterlegten Referenzdaten ist die Authentifizierung des Nutzers des mobilen Endgeräts erfolgreich. Auf eine erfolgreiche Authentifizierung des Nutzers des mobilen Endgeräts hin erfolgt eine Verschlüsselung der zuvor empfangenen Challenge durch den entsprechenden symmetrischen kryptographischen Schlüssel der elektronischen Identität, welche im Zuge des Einrichtens der elektronischen Identität auf dem mobilen Endgerät in dem Sicherheitselement des Betriebssystems hinterlegt wurde. Beispielsweise wurde der entsprechende symmetrische kryptographische Schlüssel im Zuge der Personalisierung hinterlegt, um den Nutzer des mobilen Endgeräts an die elektronische Identität zu binden.

Ausführungsformen umfassen ferner ein Verfahren zum Auslesen ein oder mehrerer Identitätsattribute einer elektronischen Identität. Die elektronische Identität ist auf einem mobilen Endgerät gespeichert und wird von einer auf dem mobilen Endgerät installierten Applikation verwaltet. Die auszulesenden Identitätsattribute sind in verschlüsselter Form auf dem mobilen Endgerät gespeichert. Auf einem Server wird ein entferntes Sicherheitselement für die elektronische Identität bereitstellt. Der Server kommuniziert mit dem mobilen Endgerät über ein Netzwerk.

Das Verfahren umfasst durch die Applikation auf dem mobilen Endgerät:

- Empfangen einer Leseanfrage eines auslesenden Computersystems,
- Senden der auszulesenden Identitätsattribute an den Server, wobei die Identitätsattribute unter Verwendung eines der elektronischen Identität zugeordneten kryptographischen Schlüssels verschlüsselt sind,
- in Antwort auf das Senden der auszulesenden Identitätsattribute, Empfangen der unter Verwendung eines ephemeren symmetrischen kryptographischen Schlüssels verschlüsselten auszulesenden Identitätsattribute,
- Weiterleiten der unter Verwendung des ephemeren symmetrischen kryptographischen Schlüssels verschlüsselten auszulesenden Identitätsattribute an das auslesende Computersystem.

Ausführungsformen können den Vorteil haben, dass sie eine kryptographische Absicherung auszulesender Identitätsattribute einer auf dem mobilen Endgerät gespeicherten elektronischen Identität unter Verwendung eines entfernten Sicherheitselements ermöglichen. Dabei besitzt beispielsweise das mobile Endgerät die Verfügungshoheit über die Identitätsattribute, während die kryptographische Absicherung der Identitätsattribute bzw. des Bereitstellens der entsprechenden Identitätsattribute durch das entfernte Sicherheitselement gewährleistet wird.

Nach Ausführungsformen umfasst das Verfahren ferner ein Authentifizieren des auslesenden Computersystems durch die Applikation. Die Applikation empfängt im Zuge des Authentifizierens des auslesenden Computersystems einen ephemeren öffentlichen kryptographischen Schlüssel des auslesenden Computersystems und leitet diesen an den Server weiter.

Ausführungsformen können den Vorteil haben, dass das Authentifizieren des auslesenden Computersystems durch die Applikation erfolgen kann, im Zuge dessen ein öffentlicher kryptographischer Schlüssel des auslesenden Computersystems zum Aushandeln von Sitzungsschlüsseln zur Verschlüsselung einer Kommunikation zwischen dem entfernten Sicherheitselement und dem auslesenden Computersystem unter Vermittlung der Applikation für das entfernte Sicherheitselement bereitgestellt werden kann.

Nach Ausführungsformen umfasst das Verfahren ferner ein Authentisieren der elektronischen Identität gegenüber dem auslesenden Computersystem. Das Authentisieren der elektronischen Identität umfasst ein Empfangen eines öffentlichen kryptographischen Schlüssels eines der elektronischen Identität zugeordneten asymmetrischen Schlüsselpaars von dem Server durch die Applikation, welche den empfangenen öffentlichen kryptographischen Schlüssel der elektronischen Identität an das auslesende Computersystem weiterleitet.

Ausführungsformen können den Vorteil haben, dass durch das Sicherheitselement ein öffentlicher kryptographischer Schlüssel der elektronischen Identität für das Authentisieren der elektronischen Identität gegenüber dem auslesenden Computersystem unter Vermittlung der Applikation bzw. des mobilen Endgeräts für das auslesende Computer-system bereitgestellt werden kann.

Nach Ausführungsformen wird der öffentliche kryptographische Schlüssel zusammen mit einem Zertifikat empfangen und an das auslesende Computersystem weitergeleitet.

Nach Ausführungsformen umfasst das Authentisieren der elektronischen Identität ferner ein Empfangen einer ersten von dem entfernten Sicherheitselement erzeugten Zufallszahl zusammen mit einem von dem entfernten Sicherheitselement erzeugten Authentisierungstoken von dem Server durch die Applikation, welche die empfangenen Zufallszahl zusammen mit dem Authentifizierungstoken an das auslesende Computersystem weiterleitet.

Ausführungsformen können den Vorteil haben, dass ein Authentisierungstoken zusammen mit einer Zufallszahl zum Authentisieren der elektronischen Identität unter Vermittlung der Applikation bzw. des mobilen Endgeräts für das auslesende Computersystem bereitgestellt werden kann. Anhand des Authentisierungstokens und der entsprechenden Zufallszahl wird das auslesende Computersystem beispielsweise dazu in die Lage versetzt, die elektronische Identität zu authentifizieren, d.h. zu prüfen, ob die entsprechende elektronische Identität Zugriff auf einen der entsprechenden elektronischen Identität zugeordneten privaten kryptographischen Schlüssel besitzt.

Nach Ausführungsformen empfängt die Applikation auf das Weiterleiten des der elektronischen Identität zugeordneten öffentlichen kryptographischen Schlüssels von dem auslesenden Computersystem eine zweite Kopie des ephemeren öffentlichen kryptographischen Schlüssels des auslesenden Computersystems, welche die Applikation zum Vergleichen mit der ersten Kopie des ephemeren öffentlichen kryptographischen Schlüssels des auslesenden Computersystems an den Server weiterleitet.

Ausführungsformen können den Vorteil haben, dass anhand der zweiten Kopie des ephemeren öffentlichen kryptographischen Schlüssels geprüft werden kann, ob es sich bei dem auslesenden Computersystem, gegenüber dem sich die elektronische Identität authentisiert, um dasselbe aus diesem Computersystem handelt, welches zuvor durch die Applikation des mobilen Endgeräts authentifiziert wurde.

Nach Ausführungsformen empfängt die Applikation die unter Verwendung des ephemeren symmetrischen kryptographischen Schlüssels verschlüsselten auszulesenden Identitätsattribute zusammen mit einem Prüfcodes der entschlüsselten auszulesenden Identitätsattribute und leitet diese an das auslesende Computersystem weiter.

Ausführungsformen können den Vorteil haben, dass anhand des Prüfcodes die Authentizität von verschlüsselten auszulesenden Attributen durch das auslesende Computersystem geprüft werden kann, welches das entsprechende auslesende Computersystem von dem entfernten Sicherheitselement empfängt.

Nach Ausführungsformen setzt das Authentisieren der elektronischen Identität gegenüber dem auslesenden Computersystem ferner ein erfolgreiches Authentisieren der Applikation gegenüber dem Server voraus.

Ausführungsformen können den Vorteil haben, dass sich die Applikation gegenüber dem Server durch das erfolgreiche Authentisieren eine Autorisierung, d.h. eine Nutzungsberechtigung des entfernten Sicherheitselements bzw. einer Sub-Security-Domain des entfernten Sicherheitselements, welches der elektronischen Identität zugeordnet ist, nachweist.

Nach Ausführungsformen umfasst das Authentisieren der Applikation gegenüber dem Server:

- Sende einer Challenge-Anfrage an den Server,
- Empfangen einer durch das entfernte Sicherheitselement erzeugten zweiten Zufallszahl als Challenge von dem Server in Antwort auf die Challenge-Anfrage,
- Erzeugen einer Response, wobei die empfangende Challenge durch ein Sicherheitselement des Betriebssystems des mobilen Endgeräts unter Verwendung eines der elektronischen Identität zugeordneten symmetrischen kryptographischen Schlüssels verschlüsselt wird, wobei der der elektronischen Identität zugeordneten symmetrischen kryptographischen Schlüssel in dem Sicherheitselement des Betriebssystems des mobilen Endgeräts gespeichert ist,

- Senden der erzeugten Response in Antwort auf die Challenge an den Server.

Ausführungsformen können den Vorteil haben, dass durch das entsprechende Challenge-Response-Verfahren in effektiver und effizienter Weise ein Authentisieren der Applikation gegenüber dem Server ermöglicht wird.

Nach Ausführungsformen setzt das Erzeugen der Response durch die Applikation ein erfolgreiches Authentifizieren des Nutzers durch das mobile Endgerät voraus.

Ausführungsformen können den Vorteil haben, dass durch die Notwendigkeit eines erfolgreichen Authentifizierens des Nutzers zum einen sichergestellt werden kann, dass tatsächlich ein berechtigter Nutzer das mobile Endgerät zum Bereitstellen der Identitätsattribute nutzt, welcher kryptographisch mit der elektronischen Identität bzw. den Identitätsattribute gekoppelt ist. Andererseits kann sichergestellt werden, dass der Nutzer dem Bereitstellen der Identitätsattribute tatsächlich zustimmt.

Ausführungsformen umfassen ferner einen Server, welcher ein entferntes Sicherheitselement für eine elektronische Identität bereitstellt. Die elektronische Identität ist auf einem mobilen Endgerät gespeichert und wird von einer auf dem mobilen Endgerät installierten Applikation verwaltet. Der Server umfasst ferner einen Prozessor, einen Speicher mit ausführbaren Programminstruktionen und eine Kommunikationsschnittstelle zur Kommunikation mit dem mobilen Endgerät über ein Netzwerk.

Der Prozessor ist dazu konfiguriert, auf ein Ausführen der Programminstruktionen den Server zum Ausführen eines Verfahrens zum Auslesen ein oder mehrerer Identitätsattribute der elektronischen Identität zu steuern. Das Verfahren umfasst:

- Empfangen der auszulesenden Identitätsattribute von der Applikation, wobei die Identitätsattribute unter Verwendung eines der elektronischen Identität zugeordneten kryptographischen Schlüssels verschlüsselt sind,
- Entschlüsseln der auszulesenden Identitätsattribute durch das entfernte Sicherheitselement,
- Verschlüsseln der entschlüsselten auszulesenden Identitätsattribute unter Verwendung eines in dem entfernten Sicherheitselement gespeicherten ephemeren symmetrischen kryptographischen Schlüssels, welchen sich das entfernte Sicherheitselement mit einem auslesenden Computersystem zur Kommunikationsverschlüsselung teilt,
- Senden der unter Verwendung des ephemeren symmetrischen kryptographischen Schlüssels verschlüsselten auszulesenden Identitätsattribute an ein auszulesendes Computersystem.

Nach Ausführungsformen ist der Server dazu konfiguriert jede der vorangehend beschriebenen Ausführungsformen des Verfahrens zum Auslesen ein oder mehrerer Identitätsattribute auszuführen.

Ausführungsformen umfassen ferner ein mobiles Endgerät, auf welchem eine elektronische Identität gespeichert ist, die von einer auf dem mobilen Endgerät installierten Applikation verwaltet wird. Das mobile Endgerät umfasst einen Prozessor, einen Speicher mit ausführbaren Programminstruktionen und eine Kommunikationsschnittstelle zur Kommunikation mit einem Server über ein Netzwerk, welcher ein entferntes Sicherheitselement für die elektronische Identität bereitstellt.

Der Prozessor ist dazu konfiguriert, auf ein Ausführen der Programminstruktionen das mobile Endgerät zum Ausführen eines Verfahrens zum Auslesen ein oder mehrerer Identitätsattribute der elektronischen Identität zu steuern. Das Verfahren umfasst durch die Applikation auf dem mobilen Endgerät:

- Empfangen einer Leseanfrage eines auslesenden Computersystems,
- Senden der auszulesenden Identitätsattribute an den Server, wobei die Identitätsattribute unter Verwendung eines der elektronischen Identität zugeordneten kryptographischen Schlüssels verschlüsselt sind,
- in Antwort auf das Senden der auszulesenden Identitätsattribute, Empfangen der unter Verwendung eines ephemeren symmetrischen kryptographischen Schlüssels verschlüsselten auszulesenden Identitätsattribute,
- Weiterleiten der unter Verwendung des ephemeren symmetrischen kryptographischen Schlüssels verschlüsselten auszulesenden Identitätsattribute an das auslesende Computersystem.

Nach Ausführungsformen ist das mobile Endgerät dazu konfiguriert jede der vorangehend beschriebenen Ausführungsformen des Verfahrens zum Auslesen ein oder mehrerer Identitätsattribute auszuführen.

Ausführungsformen umfassen ferner ein verteiltes System, welches ein mobiles Endgerät nach einer der vorangehend beschriebenen Ausführungsformen und einen Server mit einem Sicherheitselement nach einer der vorangehend beschriebenen Ausführungsformen umfasst.

Nach Ausführungsformen ist das System dazu konfiguriert jede der vorangehend beschriebenen Ausführungsformen des Verfahrens zum Auslesen ein oder mehrerer Identitätsattribute auszuführen.

Im Weiteren werden Ausführungsformen der Erfindung mit Bezugnahme auf die Zeichnungen näher erläutert. Es zeigen:

Figur 1      ein schematisches Diagramm eines exemplarischen Servers, welcher ein entferntes Sicherheitselement bereitstellt,

Figur 2      ein schematisches Diagramm eines exemplarischen mobilen Endgeräts,

Figur 3      ein Flussdiagramm eines exemplarischen Verfahrens zum Auslesen von Identitätsattributen,

Figur 4      ein Flussdiagramm eines exemplarischen Verfahrens zum Auslesen von Identitätsattributen,

Figur 5      ein Flussdiagramm eines exemplarischen Verfahrens zum Initialisieren applikationsspezifischer kryptographischer Sicherheitsfunktionen,

Figur 6      ein Flussdiagramm eines exemplarischen Verfahrens zum Initialisieren applikationsspezifischer kryptographischer Sicherheitsfunktionen,

Figur 7      ein Flussdiagramm eines exemplarischen zentralen Authentisierens eines auslesenden Computersystems,

Figur 8      ein Flussdiagramm eines exemplarischen Authentifizierens eines Applets eines entfernten Sicherheitselements,

Figur 9      ein schematisches Diagramm eines exemplarischen mobilen Endgeräts,

Figur 10     ein schematisches Diagramm eines exemplarischen Servers, welcher ein entferntes Sicherheitselement bereitstellt und

Figur 11     ein schematisches Diagramm eines exemplarischen Systems.

Elemente der nachfolgenden Ausführungsformen, die einander entsprechen, werden mit denselben Bezugszeichen gekennzeichnet.

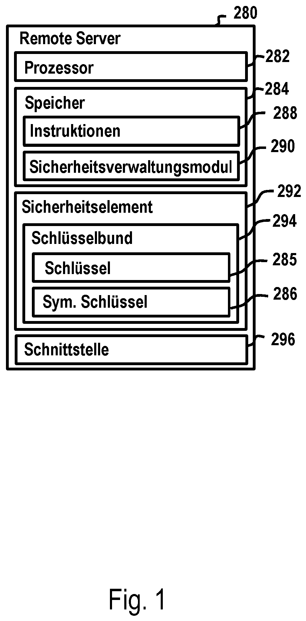

Figur 1 zeigt einen exemplarischen Server 280, welcher ein entferntes Sicherheitselement 292 zur Nutzung für ein mobiles Endgerät bzw. für eine von einer Applikation des mobilen Endgeräts verwaltete elektronische Identität über ein Netzwerk bereitstellt. Der Server 280 umfasst beispielsweise ferner einen Prozessor 282, einen Speicher 284 und eine Kommunikationsschnittstelle 296. In dem Speicher 284 sind Programminstruktionen 288 gespeichert zum Auslesen von auf dem mobilen Endgerät gespeicherten Identitätsattribute, welche die Applikation verwaltet. Die auszulesenden Identitätsattribute werden einem auslesenden Computersystem zur Verfügung gestellt. Bei Ausführung der Programminstruktionen 288 steuert der Prozessor 202 den Sicherheitsverwaltungsdienstserver 240 beispielsweise zum Empfangen der auszulesenden Identitätsattribute von der Applikation unter Verwendung der Kommunikationsschnittstelle 296. Die Identitätsattribute sind unter Verwendung eines der elektronischen Identität zugeordneten kryptographischen Schlüssels verschlüsselt. Das Sicherheitselement 292 verfügt über einen kryptographischen Schlüssel 285 zum Entschlüsseln der Identitätsattribute. Im Falle einer symmetrischen Verschlüsslung handelt es sich bei dem kryptographischen Schlüssel 285 beispielsweise um den entsprechenden symmetrischen Schlüssel. Im Falle einer asymmetrischen Verschlüsslung sind die Identitätsattribute beispielsweise mit einem öffentlichen kryptographischen Schlüssel verschlüsselt, dessen zugehöriger privater kryptographischen Schlüssel als der kryptographische Schlüssel 285 in dem entfernten Sicherheitselement 292 gespeichert ist. Das entfernte Sicherheitselement 292 entschlüsselt die auszulesenden Identitätsattribute unter Verwendung kryptographischen Schlüssels 285. Ferner verschlüsselt das entfernte Sicherheitselement 292 die entschlüsselten auszulesenden Identitätsattribute unter Verwendung eines in dem entfernten Sicherheitselement 292 gespeicherten ephemeren symmetrischen kryptographischen Schlüssels 286. Diesen ephemeren symmetrischen kryptographischen Schlüssels 286 teilt sich das entfernte Sicherheitselement 292 beispielsweise mit dem auslesenden Computersystem zur Kommunikationsverschlüsselung. Schließlich sendet der Server 280 die verschlüsselten auszulesenden Identitätsattribute an das auszulesende Computersystem unter Verwendung der Kommunikationsschnittstelle 296. Beispielsweise sendet der Server 280 die verschlüsselten auszulesenden Identitätsattribute an das mobile Endgerät zum Weiterleiten an das auszulesende Computersystem.

Das entfernte Sicherheitselement 292 umfasst beispielsweise einen der Applikation und/oder der elektronischen Identität zugeordneten Schlüsselbund 294. Der Schlüsselbund 294 stellt der Applikation 108 für die von ihr verwaltete elektronische Identität identitätsindividuelle kryptographische Schlüssel zur Verfügung zu stellen. Ferner umfassen das entfernte Sicherheitselement 292 beispielsweise weitere kryptographische Mittel, wie etwa kryptographische Funktionen und/oder kryptographische Protokolle, welche das entfernte Sicherheitselement der Applikation bzw. der elektronischen Identität zur Nutzung zur Verfügung stellt. Der Schlüsselbund 294 wird beispielsweise mittels eines Key Stores bzw. Schlüsselspeichers zum Speichern von kryptographischen Schlüsseln für die individuellen elektronischen Identität bereitgestellt, wie etwa symmetrische, öffentliche und/oder private kryptographischer Schlüssel, und von Zertifikaten, wie beispielsweise Public-Key-Zertifikaten und/oder Attributzertifikaten. Die von dem entfernten Sicherheitselement 292 bereitgestellten kryptographischen Mittel versetzten die Applikation 108 unter Verwendung des Schlüsselbunds 294 mit den identitätsindividuellen kryptographischen Schlüsseln beispielsweise dazu in die Lage, Daten für die von der Applikation 108 verwalteten elektronischen Identität zu verschlüsseln und/oder zu entschlüsseln, sowie Signaturen zu erstellen und/oder zu prüfen. Beispielsweise versetzen die von dem entfernten Sicherheitselement 292 bereitgestellten kryptographischen Mittel die Applikation 108 dazu in die Lage, für die von ihr verwaltete elektronische Identität ein Challenge Response-Verfahren auszuführen bzw. an diesem teilzunehmen. Das Sicherheitselemente 292 kann beispielsweise als ein Hardware-Sicherheitsmodul implementiert sein. Ein Hardware-Sicherheitsmodul bezeichnet ein internes oder externes Peripheriegerät, welches eine effiziente und sichere Ausführung kryptographischer Operationen und/oder Applikationen ermöglicht. Von dem Sicherheitsmodul verwendete kryptographischen Schlüssel sind auf diesem beispielsweise sowohl softwaretechnisch als auch gegen physische Angriffe oder Seitenkanalangriffe geschützt gespeichert.

Beispielsweise umfasst der Server 280 ferner ein Sicherheitsverwaltungsprogrammmodul 290 eines das Sicherheitselement 292 verwaltenden Sicherheitsverwaltungsdienstes. Beispielsweise handelt es sich bei dem Server 280 um einen Server des Sicherheitsverwaltungsdienstes oder um einen eigenständigen Server. Der Sicherheitsverwaltungsdienst stellt beispielsweise das Applet 294 zum Installieren in dem Sicherheitselement 294 bereit. Beispielsweise umfasst der Server 280 eine Mehrzahl von Sicherheitselementen 292, welche jeweils von einem individuellen Sicherheitsverwaltungsdienst verwaltet werde. Fürjedes der Sicherheitselemente 292 ist beispielsweise ein Sicherheitsverwaltungsprogrammmodul 290 auf dem Server 280 installiert. Beispielsweise umfasst der Server 280 genau ein Sicherheitselementen 292 oder ausschließlich Sicherheitselemente 292, welche von demselben Sicherheitsverwaltungsdienst verwaltet werden. Beispielsweise wird eine Mehrzahl von Server 280 bereitgestellt, welche unterschiedlichen Sicherheitsverwaltungsdiensten zugeordnet sind und ausschließlich Sicherheitselemente 292 umfassten, welche von demselben Sicherheitsverwaltungsdienst verwaltet werden, welchem der entsprechende Server 280 zugeordnet ist.

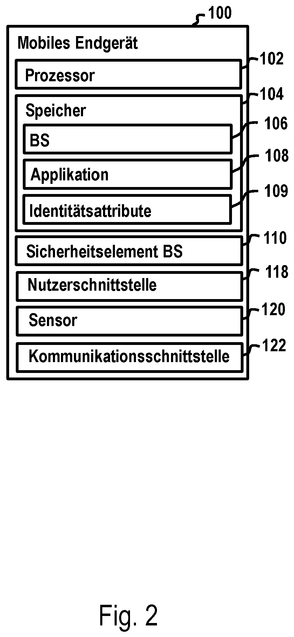

Figur 2 zeigt ein exemplarisches mobiles Endgerät 100, beispielsweise ein Smartphone, welches einen Speicher 104 mit Programminstruktionen umfasst, welche von einem Prozessor 102 ausgeführt werden. Die Programminstruktionen können beispielsweise ein auf dem mobiles Endgerät 100 installierten Betriebssystems 106 und ein oder mehrerer Applikationen bzw. Anwendungsprogramme 108 umfassen. Beispielsweise umfasst das mobile Endgerät 100 ein Sicherheitselement 110, welches dem Betriebssystem 106 zugeordnet ist und für dieses kryptographische Mittel bereitstellt, wie beispielsweise kryptographische Schlüssel, kryptographische Funktionen und/oder kryptographische Protokolle. Das Sicherheitselement 110 des Betriebssystems 106 stellt beispielsweise einen Key Store bzw. Schlüsselspeicher zum Speichern von kryptographischen Schlüsseln bereit, wie etwa symmetrische, öffentliche und/oder private kryptographischer Schlüssel, und von Zertifikaten, wie beispielsweise Berechtigungszertifikate, Public-Key-Zertifikate und/oder Attributzertifikate. Die von dem ersten Sicherheitselement 110 bereitgestellten kryptographischen Mittel versetzten das Betriebssystem 106 beispielsweise dazu in die Lage, Daten zu verschlüsseln und/oder zu entschlüsseln, sowie Signaturen zu erstellen und/oder zu prüfen. Beispielsweise versetzen die von dem ersten Sicherheitselement 110 bereitgestellten kryptographischen Mittel das Betriebssystem 106 dazu in die Lage, ein Challenge Response-Verfahrens auszuführen bzw. an diesem teilzunehmen.

Ferner umfasst das mobile Endgerät 100 eine Nutzerschnittelle 118, welche beispielsweise ein Display, insbesondere ein Touchscreen, umfasst. Unter Verwendung des Nutzerschnittelle 118, kann der Nutzer mit dem mobiles Endgerät 100 interagieren. Beispielsweise kann der Nutzer zum Bereitstellen von Authentifizierungsdaten bzw. Authentifizierungsmerkmalen aufgefordert werden. Zum Erfassen von Authentifizierungsdaten des Nutzers umfasst das mobile Endgerät 100 einen Sensor bzw. Authentifizierungssensor 120, welcher beispielsweise in die Nutzerschnittstelle 118 integriert oder als eigenständige Komponente implementiert sein kann. Die Authentifizierungsdaten können beispielsweise biometrische Daten des Nutzers umfassen, wie beispielsweise: Fingerabdruckdaten, Körpergeometriedaten/Anthropometriedaten, wie etwa Gesichts-, Hand-, Ohrgeometriedaten, Handlinienstrukturdaten, Venenstrukturdaten, wie etwa Handvenenstrukturdaten, Irisdaten, Retinadaten, Stimmerkennungsdaten, Nagelbettmuster. Die Authentifizierungsdaten können beispielsweise ein Wissen des Nutzers umfassen, wie eine PIN oder Passwort. Ferner können die Authentifizierungsdaten beispielsweise Verhaltensmerkmale bzw. Verhaltensdaten des Nutzers umfassen, wie beispielsweise Bewegungsdaten des mobile Endgerät 100, welche durch von grob- und/oder feinmotorische Bewegungen des Nutzers verursacht werden, wenn dieser das des mobile Endgerät 100 bei sich trägt und/oder nutzt. Ein entsprechendes Authentifizieren des Nutzers kann beispielsweise Voraussetzung für ein Freigeben von Identitätsattributen der elektronischen Identität zum Auslesen durch ein auslesendes Computersystem sein. Durch eine entsprechende Nutzerauthentifizierung kann zum einen sichergestellt werden, dass das mobile Endgerät 100 von einem berechtigten Nutzer genutzt wird. Zum andern kann das Bereitstellen von Authentifizierungsdaten durch den Nutzer ein Einverständnis des Nutzers zum Auslesen der Identitätsattributen der elektronischen Identität durch das auslesende Computersystem darstellen. Schließlich umfasst das mobile Endgerät 100 eine Kommunikationsschnittstelle 122, etwa eine Antenne, welche konfiguriert ist für eine kontaktlose oder kontaktbehaftete Kommunikation etwa mit dem auslesenden Computersystem. Beispielsweise kann die Kommunikation mit dem auslesenden Computersystem über ein Netzwerk, wie etwa ein Intranet oder das Internet, erfolgen.

In dem Speicher des mobilen Endgeräts 100 sind ferner Identitätsattribute 109 einer von der Applikation 108 verwalteten elektronischen Identität in verschlüsselter Form gespeichert. Hierbei verfügt das mobile Endgerät 100 beispielsweise über die Identitätsattribute 109, ohne diese entschlüsseln zu können, während ein von einem Server bereitgestelltes entferntes Sicherheitselement über einen kryptographischen Schlüssel zum Entschlüsseln der die Identitätsattribute 109 verfügt. Somit kann die kryptographische Sicherung der Identitätsattribute 109 auf den Server bzw. das von diesem bereitgestellte entfernte Sicherheitselement ausgelagert werden, während das mobile Endgerät 100 bzw. der Nutzer des mobilen Endgeräts 100 die Verfügungshoheit über die Identitätsattribute 109 und damit seine entsprechende elektronische Identität behält. Das mobile Endgerät 100 ist beispielsweise dazu konfiguriert ein Auslesen der Identitätsattribute 109, welche die Applikation 108 verwaltet, durch ein auslesendes Computersystem zu ermöglichen. Beispielsweise empfängt das mobile Endgerät 100 über die Kommunikationsschnittstelle 122 eine Leseanfrage des auslesenden Computersystems nach auszulesenden Identitätsattributen 109. Das mobile Endgerät 100 sendet die auszulesenden Identitätsattribute 109 in verschlüsselter Form über die Kommunikationsschnittstelle 122 an den Server. In Antwort auf das Senden der auszulesenden Identitätsattribute, empfängt das mobile Endgerät 100 die auszulesenden Identitätsattribute 109 über die Kommunikationsschnittstelle 122 zum Weiterleiten an das auslesende Computersystem. Die weiterzuleitenden Identitätsattribute wurden von dem Server entschlüsselt und unter Verwendung eines ephemeren symmetrischen kryptographischen Schlüssels wieder verschlüsselt. Das mobile Endgerät 100 leitet die unter Verwendung des ephemeren symmetrischen kryptographischen Schlüssels verschlüsselten auszulesenden Identitätsattribute 109 über die Kommunikationsschnittstelle 122 an das auslesende Computersystem weiter.

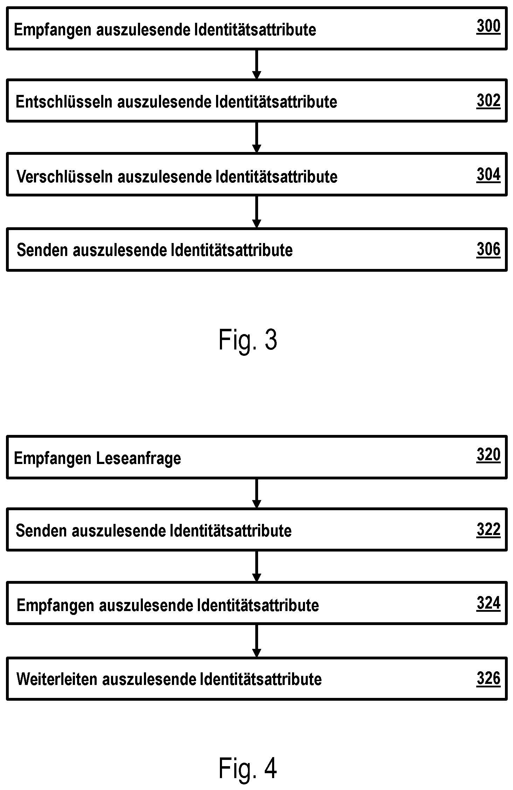

Figur 3 zeigt ein exemplarisches Verfahren zum Auslesen von Identitätsattribute einer auf einem mobilen Endgerät gespeicherten und von einer auf dem mobilen Endgerät installierten Applikation verwalteten elektronischen Identität unter Verwendung eines Servers. Der Server stellt ein entferntes Sicherheitselement für die elektronische Identität bereitstellt. Die auszulesenden Identitätsattribute sind in verschlüsselter Form auf dem mobilen Endgerät gespeichert. Der Server kommuniziert mit dem mobilen Endgerät über ein Netzwerk.

In Block 300 empfängt der Server über das Netzwerk auszulesenden Identitätsattribute von der die entsprechende elektronische Identität verwaltenden Applikation des mobilen Endgeräts. Die empfangenen Identitätsattribute sind unter Verwendung eines der elektronischen Identität zugeordneten kryptographischen Schlüssels verschlüsselt. Bei dem entsprechenden Schlüssel kann es sich beispielsweise um einen symmetrischen kryptographischen Schlüssel oder einen öffentlichen kryptographischen Schlüssel eines asymmetrischen Schlüsselpaars handeln. Das entfernte Sicherheitselement des Servers verfügt über einen kryptographischen Schlüssel zum Entschlüsseln der Identitätsattribute, d.h. beispielsweise den entsprechenden symmetrischen kryptographischen Schlüssel oder einen dem öffentlichen kryptographischen Schlüssel zugeordneten privaten kryptographischen Schlüssel. In Block 302 entschlüsselt das entfernte Sicherheitselement die auszulesenden Identitätsattribute unter Verwendung des in dem Sicherheitselement gespeicherten kryptographischen Schlüssels. In Block 304 verschlüsselt das entfernte Sicherheitselement die entschlüsselten auszulesenden Identitätsattribute unter Verwendung eines in dem entfernten Sicherheitselement gespeicherten ephemeren symmetrischen kryptographischen Schlüssels. Diesen ephemeren symmetrischen kryptographischen Schlüssel teilt sich das entfernte Sicherheitselement beispielsweise mit dem auslesenden Computersystem zur Kommunikationsverschlüsselung. In Block 306 sendet der Server die wieder verschlüsselten auszulesenden Identitätsattribute über das Netzwerk an das auszulesende Computersystem. Beispielsweise sendet der Server die wieder verschlüsselten auszulesenden Identitätsattribute an das mobile Endgerät zum Weiterleiten an das auszulesende Computersystem.

Figur 4 zeigt ein exemplarisches Verfahren zum Auslesen von Identitätsattribute einer auf einem mobilen Endgerät gespeicherten und von einer auf dem mobilen Endgerät installierten Applikation verwalteten elektronischen Identität unter Verwendung eines Servers. Der Server stellt ein entferntes Sicherheitselement für die elektronische Identität bereit. Die auszulesenden Identitätsattribute sind auf dem mobilen Endgerät in verschlüsselter Form gespeichert. Der Server kommuniziert mit dem mobilen Endgerät über ein Netzwerk. In Block 320 empfängt die Applikation auf dem mobilen Endgerät über das eine Leseanfrage eines auslesenden Computersystems nach auszulesenden Identitätsattributen. In Block 322 sendet die Applikation die auszulesenden Identitätsattribute in ihrer verschlüsselten Form über das Netzwerk an den Server. Die gesendeten Identitätsattribute sind unter Verwendung eines der elektronischen Identität zugeordneten kryptographischen Schlüssels verschlüsselt. Bei dem entsprechenden Schlüssel kann es sich beispielsweise um einen symmetrischen kryptographischen Schlüssel oder einen öffentlichen kryptographischen Schlüssel eines asymmetrischen Schlüsselpaars handeln. Das entfernte Sicherheitselement des Servers verfügt über einen kryptographischen Schlüssel zum Entschlüsseln der Identitätsattribute, d.h. beispielsweise den entsprechenden symmetrischen kryptographischen Schlüssel oder einen dem öffentlichen kryptographischen Schlüssel zugeordneten privaten kryptographischen Schlüssel. In Block 324 empfängt die Applikation des mobilen Endgeräts, in Antwort auf das Senden der auszulesenden Identitätsattribute, die auszulesenden Identitätsattribute von dem Server über das Netzwerk zum Weiterleiten an das auslesende Computersystem. Die weiterzuleitenden Identitätsattribute wurden von dem Server entschlüsselt und unter Verwendung eines ephemeren symmetrischen kryptographischen Schlüssels wieder verschlüsselt. In Block 326 leitet die Applikation die unter Verwendung des ephemeren symmetrischen kryptographischen Schlüssels verschlüsselten auszulesenden Identitätsattribute in Antwort auf die in Block 320 empfangene Leseanfrage an das auslesende Computersystem weiter.

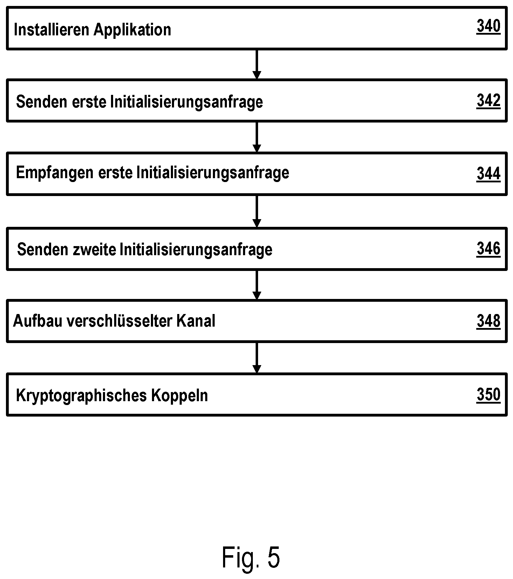

Figur 5 zeigt ein exemplarisches Verfahren zum Initialisieren applikationsspezifischer kryptographischer Sicherheitsfunktionen auf einem entfernten Sicherheitselement eines Servers für eine Applikation eines mobilen Endgeräts. In Block 340 wird eine mobile Applikation auf dem mobilen Endgerät installiert. In Block 342 wird eine Initialisierungsanfrage von der installierten Applikation beispielsweise über ein Netzwerk an ein das auf dem Server installierte Sicherheitsverwaltungsprogrammmodul des Sicherheitsverwaltungsdienstes gesendet, welcher das entfernte Sicherheitselement des Servers verwaltet. Die Initialisierungsanfrage fragt ein Implementieren applikationsspezifischer kryptographischer Sicherheitsfunktionen für die Applikation in dem entfernten Sicherheitselement an, welches der entsprechende Sicherheitsverwaltungsdienst verwaltet. In Block 344 empfängt das Sicherheitsverwaltungsprogrammmodul des Servers die Initialisierungsanfrage der Applikation. In Block 346 wird von dem Sicherheitsverwaltungsprogrammmodul eine Initialisierungsanfrage an einen Server des ausgewählten Sicherheitsverwaltungsdienstes gesendet und ein Implementieren der applikationsspezifischen kryptographischen Sicherheitsfunktionen für die installierte Applikation auf dem entfernten Sicherheitselement durch den Sicherheitsverwaltungsdienst angefragt. Alternativ kann es sich bei dem Server mit dem entfernten Sicherheitselement um einen Server des Sicherheitsverwaltungsdienstes handeln, womit die zweite Initialisierungsanfrage wegfallen könnte. In Block 348 wird beispielsweise ein verschlüsselter Kanal zwischen dem entfernten Sicherheitselement und dem Server des ausgewählten Sicherheitsverwaltungsdienstes aufgebaut. Hierzu wird beispielsweise ein kryptographischer Schlüssel des Sicherheitsverwaltungsdienstes verwendet. Dieser kryptographische Schlüssel des Sicherheitsverwaltungsdienstes weist beispielsweise einen dem Sicherheitsverwaltungsdienst vorbehaltenen Schreibzugriff auf das von dem Sicherheitsverwaltungsdienst verwaltete Sicherheitselement nach. In Block 350 wird die Applikation mit dem entfernten Sicherheitselement kryptographisch gekoppelt, wodurch eine Nutzung der von dem entfernten Sicherheitselement bereitgestellten applikationsspezifischen kryptographischen Sicherheitsfunktionen für die Applikation freigeschaltet wird. Hierbei wird in dem entfernten Sicherheitselement beispielsweise ein der von der Applikation verwalteten elektronischen Identität zugeordneter kryptographischer Schlüssel gespeichert. Bei dem entsprechenden kryptographischen Schlüssel kann es sich beispielsweise um einen symmetrischen kryptographischen Schlüssel oder einen kryptographischen Schlüssel eines asymmetrischen Schlüsselpaars handeln, welches in dem entfernten Sicherheitselement gespeichert wird. Der gespeicherte kryptographische Schlüssel kann beispielsweise durch das entfernte Sicherheitselement erzeugt werden oder von dem das entfernte Sicherheitselement verwaltenden Sicherheitsverwaltungsdienst empfangen. Beispielsweise wird der kryptographische Schlüssel von einem Server des Sicherheitsverwaltungsdienstes in das entfernte Sicherheitselement über einen verschlüsselten Kanal eingebracht. Im Falle eines von dem entfernten Sicherheitselement erzeugten asymmetrischen Schlüsselpaars, wird beispielsweise ein öffentlicher kryptographischer Schlüssel des entsprechenden asymmetrischen Schlüsselpaars dem Server des ausgewählten Sicherheitsverwaltungsdienstes über das Sicherheitsverwaltungsprogrammmodul des entsprechenden Sicherheitsverwaltungsdienstes zur Verfügung gestellt.

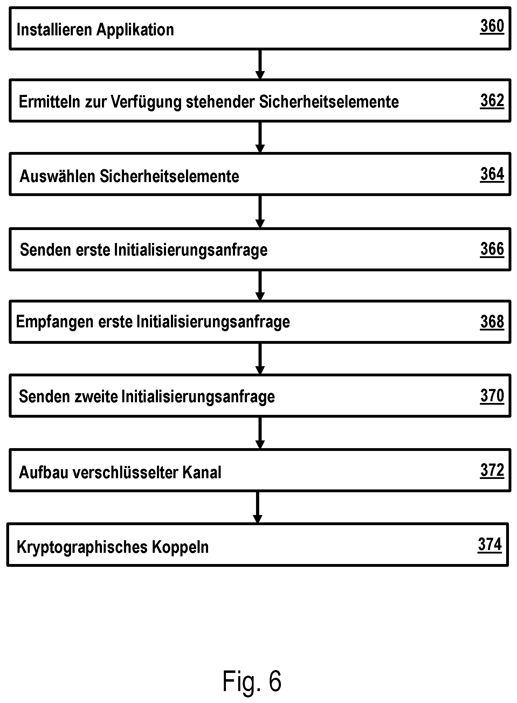

Figur 6 zeigt ein weiteres exemplarisches Verfahren zum Initialisieren applikationsspezifischer kryptographischer Sicherheitsfunktionen für eine mobile Applikation auf einem entfernten Sicherheitselement eines Servers für eine Applikation eins mobilen Endgeräts. In Block 360 wird die mobile Applikation auf dem mobilen Endgerät installiert. In Block 362 ermittelt die installierte Applikation, welche entfernten Sicherheitselemente auf Servern dem mobilen Endgerät zur Verfügung stehen und zum Bereitstellen applikationsspezifischer kryptographischer Sicherheitsfunktionen für die mobile Applikation verwendbar sind. In Block 364 wird zumindest einer der Server mit einem ermittelten entfernten Sicherheitselemente ausgewählt. Beispielsweise werden mehrere Server mit einem ermittelten Sicherheitselement ausgewählt. Die Auswahl kann automatisch erfolgen. Beispielsweise kann auch ein Auswahlvorschlag erstellt und dem Nutzer des mobilen Endgeräts angezeigt werden. Der Nutzer kann dem Vorschlag beispielsweise zustimmen oder diesen ändern. Nach Ausführungsformen ist ein Teil des Vorschlags obligatorisch und kann von dem Nutzer nicht geändert werden, während ein anderer Teil fakultativ ist und von dem Nutzer geändert werden kann. Die ausgewählten entfernten Sicherheitselemente werden jeweils von einem Sicherheitsverwaltungsdienst verwaltet. Für jeden dieser Sicherheitsverwaltungsdienste ist beispielsweise jeweils ein Sicherheitsverwaltungsprogrammmodul auf dem das entsprechende entfernte Sicherheitselement bereitstellenden Server installiert. Falls für einen der Sicherheitsverwaltungsdienste ein Sicherheitsverwaltungsprogrammmodul fehlt, kann dieses im Zuge des Verfahrens beispielsweise auf dem Server installiert werden. Für jedes der ausgewählten entfernten Sicherheitselemente werden die Blöcke 366 bis 374 ausgeführt, welche identisch sind mit den Blöcken 344 bis 350 der Figur 5.

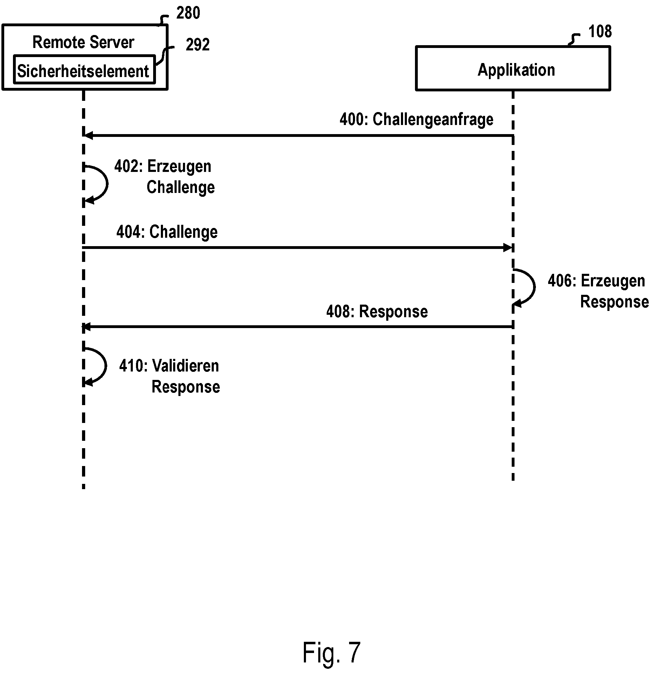

Figur 7 zeigt ein exemplarisches Verfahren zum Authentifizieren der Applikation 108 des mobilen Endgerätes durch den Server 280 unter Verwendung des entfernten Sicherheitselements 292. In Schritt 400 empfängt der Server eine von der Applikation über ein Netzwerk gesendete Challengeanfrage. In Schritt 402 erzeugt beispielsweise das Sicherheitselements 292 eine Challenge für die Applikation, bei welcher es sich beispielsweise um eine Zufallszahl handelt. In Schritt 404 sendet der Server 280 die Challenge über das Netzwerk an die Applikation, welche unter Verwendung der Challenge in Schritt 406 eine Response erzeugt. Beispielsweise erzeugt die Applikation die Response unter Verwendung eines der elektronischen Identität zugeordneten symmetrischen kryptographischen Schlüssels. Bei der Response handelt es sich beispielsweise um eine Signatur der Challenge. Der zum Erstellen der Challenge verwendete kryptographische Schlüssel, beispielsweise ein symmetrischer kryptographischer Schlüssel, wird von einem Sicherheitselement des Betriebssystems des mobilen Endgeräts bereitgestellt. Eine Verwendung des entsprechenden kryptographischen Schlüssels und damit die Erzeugung der Response setzt beispielsweise ein erfolgreiches Authentifizieren des Nutzers durch das mobile Endgerät voraussetzt. Hierzu werden beispielsweise biometrische Merkmale des Nutzers erfasst und d mit Referenzmerkmalen verglichen, welche beispielsweise in dem Sicherheitselement des Betriebssystems hinterlegt sind. Eine erfolgreiche Authentifizierung des Nutzers stellt beispielsweise zugleich eine Einverständniserklärung des Nutzers zum Auslesen der Identitätsattribute dar. In Schritt 408 empfängt der Server 280 die Response der Applikation und validiert diese in Schritt 410. Beispielsweise wird die Signatur mit einem in dem entfernten Sicherheitselement gespeicherten kryptographischen Schlüssel als Signaturprüfschlüssel geprüft. Ist die Signaturprüfung erfolgreich, gilt die Applikation und gegebenenfalls der Nutzer als authentifiziert. Ferner stellt eine erfolgreiche Signaturprüfung beispielsweise eine Bestätigung des Einverständnisses des Nutzers zum Auslesen der Identitätsattribut dar.

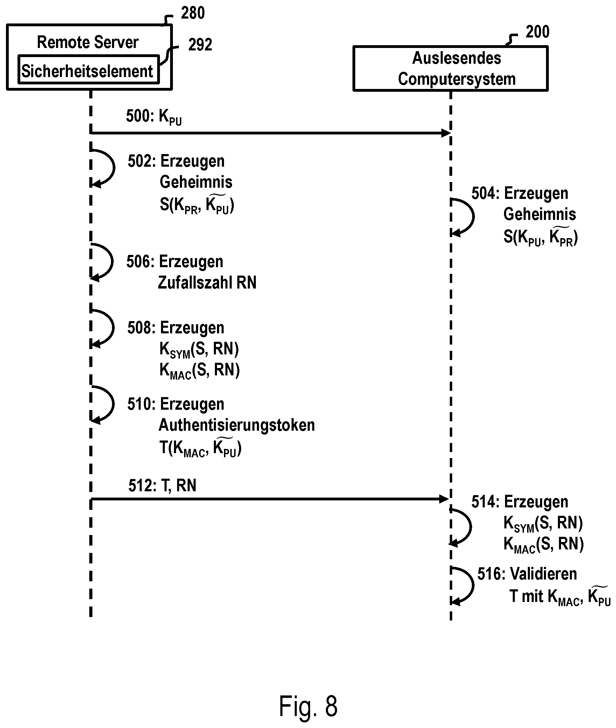

Figur 8 zeigt ein Verfahren zum Authentisieren einer von einer Applikation auf einem mobilen Endgerät verwalteten elektronischen Identität gegenüber einem Identitätsattribute der entsprechenden Identität auslesenden Computersystem unter Verwendung eines von einem Server über ein Netzwerk bereitgestellten entfernten Sicherheitselements. In Schritt 500 sendet der Server 280 bzw. das entfernte Sicherheitselement einen öffentlichen kryptographischen Schlüssels $K_{PU}$ eines der elektronischen Identität zugeordneten asymmetrischen Schlüsselpaars an das auslesende Computersystem 200. In Schritt 502 berechnet das entfernte Sicherheitselement 292 ein mit dem auslesenden Computersystem 200 geteilten Geheimnisses S unter Verwendung eines privaten kryptographischen Schlüssels $K_{PR}$ des der elektronischen Identität zugeordneten asymmetrischen Schlüsselpaars und einem von dem auslesenden Computersystem 200 empfangenen ephemeren öffentlichen

kryptographischen Schlüssel $\widetilde{K_{PU}}$ des auslesenden Computersystems 200. Der entsprechende öffentlichen kryptographischen Schlüssel $\widetilde{K_{PU}}$ des auslesenden Computersystems 200 wird beispielsweise im Zuge des Authentifizierens des auslesenden Computersystems 200 von der Applikation empfangen und an das entfernte Sicherheitselement weitergeleitet. Beispielsweise wird im Zuge des Authentisierens der Applikationen eine zweite Kopie des ephemeren öffentlichen kryptographischen Schlüssels $\widetilde{K_{PU}}$ empfangen, welche mit der im Zuge des Authentifizierens des auslesenden Computersystems 200 empfangen Kopie des ephemeren öffentlichen kryptographischen Schlüssels $\widetilde{K_{PU}}$ verglichen wird. In Schritt 504 berechnet das auslesende Computersystem 200 ebenfalls das geteilten Geheimnis S. Hierzu verwendet das auslesende Computersystem 200 beispielsweise den in Schritt 500 gesendeten öffentlichen kryptographischen Schlüssels $K_{PU}$ sowie den zu dem ephemeren öffentlichen kryptographischen Schlüssel $\widetilde{K_{PU}}$ gehörenden ephemeren privaten kryptographischen Schlüssel $\widetilde{K_{PR}}$. In Schritt 506 erzeugt das entfernte Sicherheitselement 292 eine Zufallszahl RN. In Schritt 508 erzeugt das entfernte Sicherheitselement 292 einen Authentisierungsschlüssel $K_{MAC}$, z.B. einen Schlüssel zum Erzeugen eines MAC-Codes, sowie einen symmetrischen kryptographischen Schlüssel $K_{SYM}$. Die Schlüssel $K_{SYM}$ und $K_{MAC}$ dienen beispielsweise dazu von dem entfernten Sicherheitselement 292 für die Applikation an das auslesende Computersystem 200 gesendete Daten, wie etwa Identitätsattribute, zu verschlüsseln und deren Authentizität nachzuweisen, etwa unter Verwendung eines MAC-Codes. In Schritt 510 erzeugt das entfernte Sicherheitselement 292 einen Authentisierungstoken T unter Verwendung des Authentisierungsschlüssels $K_{MAC}$ und des ephemeren öffentlichen kryptographischen Schlüssels $\widetilde{K_{PU}}$. In Schritt 512 wird der Authentisierungstoken T zusammen mit der in Schritt 506 erzeugten Zufallszahl RN an das auslesende Computersystem 200 gesendet. In Schritt 514 verwendet das auslesende Computersystem 200 die empfangene Zufallszahl RN zusammen mit dem in Schritt 504 berechneten geteilten Geheimnis S zum Berechnen des Authentisierungsschlüssels $K_{MAC}$, z.B. eines Schlüssels zum Erzeugen eines MAC-Codes, sowie des symmetrischen kryptographischen Schlüssels $K_{SYM}$. In Schritt 516 wird schließlich der empfangene Authentisierungstoken T von dem auslesenden Computersystem 200 unter Verwendung des Schlüssels $K_{MAC}$ und des ephemeren öffentlichen kryptographischen Schlüssels $\widetilde{K_{PU}}$ validiert. Beispielsweise berechnet das auslesende Computersystem 200 ebenfalls den Authentisierungstoken T und vergleicht das Ergebnis mit dem empfangenen Authentisierungstoken T. Falls beide übereinstimmen ist die Applikation bzw. die von ihr verwaltete elektronische Identität erfolgreich authentisiert.

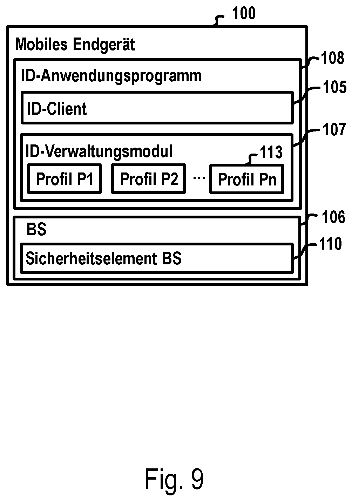

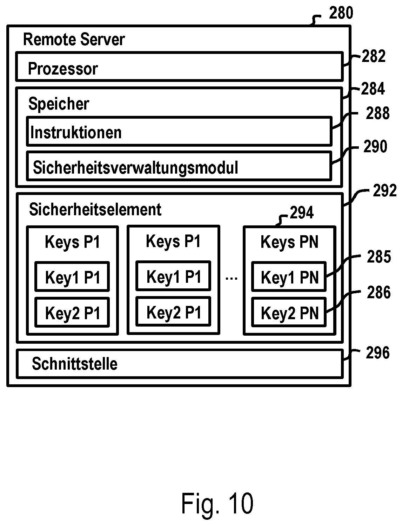

Figur 9 zeigt ein exemplarisches mobiles Endgerät 100, auf welchem ein oder mehrere Anwendungsprogramms 108 gespeichert sind, bei denen es sich beispielsweise um ein ID-Anwendungsprogramme handelt. Ein ID-Anwendungsprogramm 108 verwaltet beispielsweise ein oder mehrere dem Nutzer zugeordnete elektronische Identitäten mit Identitätsattributen. Hierzu umfasst es beispielsweise ein ID-Verwaltungsmodul 107 mit ein oder mehreren Identitäten bzw. ID-Profilen 113. Jeder der elektronischen Identitäten 113 ist beispielsweise jeweils ein Schlüsselbund 294 mit ein oder mehreren der elektronischen Identitäten 113 in einem entfernten Sicherheitselement 292 eines Servers 280, wie beispielsweise dem in Figur 10 gezeigten Server 280, zugeordnet. Jeder der elektronischen Identitäten 113 ist jeweils ein Satz von ein oder mehreren Identitätsattributen zugeordnet. Diese Identitätsattribute sind verschlüsselt in einem Speicher des mobilen Endgeräts 100 gespeichert. Die kryptographischen Schlüssel zum Entschlüsseln der verschlüsselten Identitätsattribute sind in diesem Fall beispielswese jeweils in den entsprechenden Schlüsselbünden 294 in einem entfernten Sicherheitselement 292 gespeichert sind. Das ID-Anwendungsprogramm 108 umfasst ferner beispielsweise ein ID-Clientmodul 105, über welches das ID-Anwendungsprogramm 108 beispielsweise Anfragen nach Identitätsattributen eines der ID-Profile 113 von einem auslesenden Computersystem empfangen kann. In Antwort auf die Anfrage, beispielsweise durch einen ID-Provider-Service über ein Netzwerk, kann das ID-Anwendungsprogramm 108 nach einer erfolgreichen zentralen Authentifizierung des auslesenden Computersystems die angefragten Identitätsattribute unter der Voraussetzung einer Zustimmung des Nutzers zur Verfügung stellen. Hierfür kann eine Nutzerauthentifizierung gegenüber dem ID-Anwendungsprogramm 108 notwendig sein bzw. kann ein Nachweis einer erfolgreichen Nutzerauthentifizierung durch das ID-Anwendungsprogramm 108 mittels eines Challenge-Response-Verfahrens notwendig sein. Hierzu wird ein dem Betriebssystem 106 zugeordnetes Sicherheitselement 110 verwendet. Dieses führt beispielsweise eine Nutzerauthentifizierung mit einem Authentifizierungssensor des mobilen Endgeräts 100 aus und bestätigt dem entfernten Sicherheitselement 292 die erfolgreiche Nutzerauthentifizierung. Die Bestätigung erfolgt beispielsweise ebenfalls unter Verwendung eines Challenge-Response-Verfahrens. Eine erfolgreiche Nutzerauthentifizierung gilt beispielsweise zugleich als Zustimmung des Nutzers zu einem Auslesen der angefragten Identitätsattribute. Beispielsweise kann der Nutzer die Möglichkeit haben über eine Nutzerschnittstelle die Auswahl der zum Auslesen zur Verfügung gestellten Identitätsattribute zu beeinflussen, z.B. zu ändern.

Figur 10 zeigt einen exemplarischen Server 290, welcher ein entferntes Sicherheitselement 292 umfasst, in welchem Schlüsselbünde 294 für ein oder mehrere elektronische Identitäten, wie beispielsweise die Identitäten der Profile 113 der Figur 9, gespeichert sind. Die elektronischen Identitäten werden beispielsweise von ein oder mehreren mobilen Endgeräten, wie dem mobilen Endgerät 100 in Figur 9, bereitgestellt. Die Identitätsattribute der entsprechenden elektronischen Identitäten sind beispielsweise in verschlüsselter Form auf den mobilen Endgeräten gespeichert. Das entfernte Sicherheitselement 292 bzw. die Schlüsselbünde 294 umfassen jeweils einen kryptographischen Schlüssel zum Entschlüsseln der verschlüsselten Identitätsattribute. Ferner umfassen das entfernte Sicherheitselement 292 bzw. die Schlüsselbünde 294 jeweils einen kryptographischen Schlüssel 286 zum Verschlüsseln der entschlüsselten Identitätsattribute für ein auslesendes Computersystem, d.h. in einer Weise, dass das auslesende Computersystem die Identitätsattribut entschlüsseln kann.

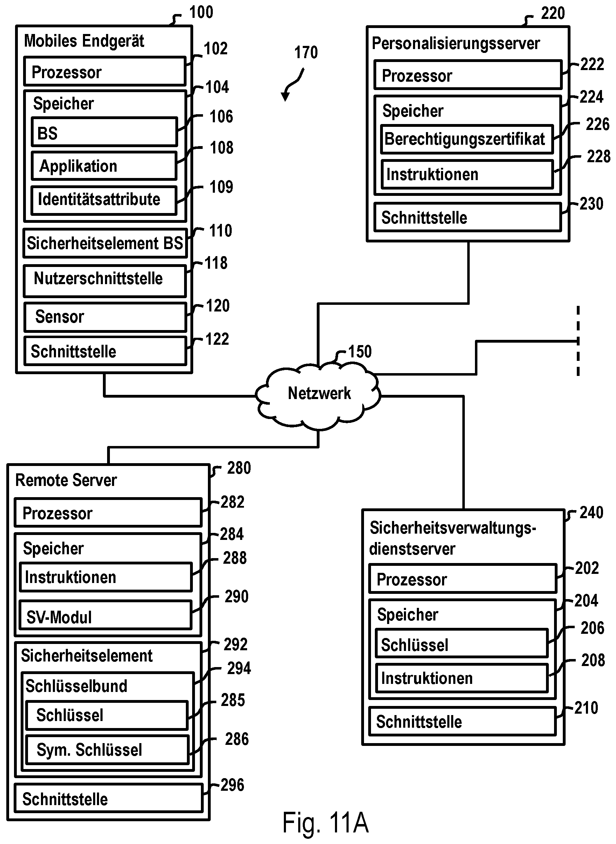

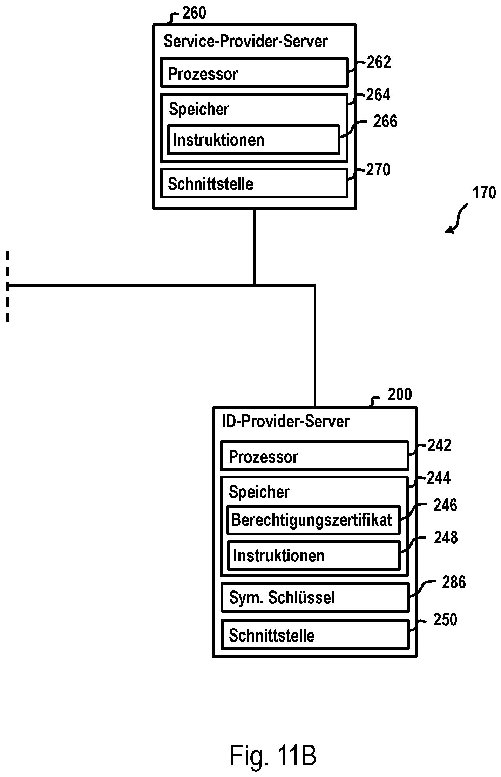

Figur 11 zeigt ein exemplarisches System 170, welches beispielsweise ein mobiles Endgerät 100 umfasst, das über ein Netzwerk 150, beispielsweise das Internet, mit einem Server 280, welcher ein entferntes Sicherheitselement 292 bereitstellt verbunden ist. Ferner sind über das Netzwerk 150 beispielsweise ein Sicherheitsverwaltungsdienstserver 240, ein Personalisierungsserver 220, einem ID-Provider-Server 200 und/oder einem Service-Provider-Server 260 verbunden.

Der Sicherheitsverwaltungsdienstserver 240 verwaltet beispielsweise das von dem Server 280 bereitgestellt Sicherheitselemente 292. Alternativer Weise kann auch der Server 280 als Sicherheitsverwaltungsdienstserver 240 konfiguriert sein. Beispielsweise ist dem Sicherheitsverwaltungsdienstserver 240 ein Sicherheitsverwaltungsprogrammmodul 290 des Servers 280 zugeordnet. Soll ein Schlüsselbund für die Applikation 108 des mobilen Endgerätes 100 in dem Sicherheitselemente 292 initialisiert werden, wird dies beispielsweise über das Sicherheitsverwaltungsprogrammmodul 290 unter Verwendung des Sicherheitsverwaltungsdienstserver 240 ausgeführt. Der Sicherheitsverwaltungsdienstserver 240 umfasst beispielsweise einen Prozessor 202, einen Speicher 204 und eine Kommunikationsschnittstelle 210. In dem Speicher 204 sind Programminstruktionen 208 gespeichert, bei deren Ausführung der Prozessor 202 den Sicherheitsverwaltungsdienstserver 240 zum Initialisieren des Schlüsselbunds 294 in dem entfernten Sicherheitselement 292 des Servers 280 steuert, welches der entsprechende Sicherheitsverwaltungsdienst verwaltet. Der Schlüsselbund 294 ist beispielsweise der Applikation 108 des mobilen Endgeräts 100 bzw. einer von der entsprechenden Applikation verwaltenden elektronischen Identität zugeordnet. Zum Nachweis einer Schreibberechtigung zum Installieren des Schlüsselbunds 294 verwendet der Sicherheitsverwaltungsdienstserver 240 beispielsweise einen sicherheitsverwaltungsdienstspezifischen kryptographischen Schlüssel 206.

Der Personalisierungsserver 220 umfasst beispielsweise einen Prozessor 222, einen Speicher 224 und eine Kommunikationsschnittstelle 230. In dem Speicher 224 sind Programminstruktionen 228 gespeichert, bei deren Ausführung der Prozessor 222 den Personalisierungsserver 220 zum Bereitstellen eines symmetrischen Schlüssels für ein Challenge-Response-Verfahren zwischen den Sicherheitselementen 110, 292 des mobile Endgerät 100 und des Servers 280 steuert. Somit kann der initialisierte Schlüsselbund 294 an das eine Nutzerauthentifizierung unter Verwendung des Sensors 120 ausführende Sicherheitselement 110 und damit an den Nutzer des mobilen Endgeräts 100 gekoppelt werden. Zum Nachweis einer Schreibberechtigung zum Hinzufügen des symmetrischen Schlüssels zu dem Schlüsselbund 294 zugeordneten Speicherbereich des entfernten Sicherheitselements 292 des Servers 280 verwendet der Personalisierungsserver 220 beispielsweise das Berechtigungszertifikat 226.

Der Service-Provider-Server 260 umfasst beispielsweise einen Prozessor 262, einen Speicher 264 und eine Kommunikationsschnittstelle 270. In dem Speicher 264 sind Programminstruktionen 268 gespeichert, bei deren Ausführung der Prozessor 262 den Service-Provider-Server 260 zum Bereitstellen von Dienstleistungen steuert, welche beispielsweise von dem mobilen Endgerät 100 über das Netzwerk 150 angefragt und/oder genutzt werden können. Eine Inanspruchnahme von Dienstleistungen des Service-Provider-Server 260 setzt beispielsweise ein Bereitstellen und/oder Nachweis eines oder mehrerer Identitätsattribute des Nutzers voraus. Auf eine Anfrage einer Dienstleistung des Service-Provider-Server 260 durch das mobile Endgerät 100 sendet dar Service-Provider-Servers 260 eine Identitätsattributsanfrage zum Auslesen von Identitätsattributen des Nutzers des mobilen Endgeräts 100 an einen ID-Provider-Server 200. Die Identitätsattributsanfrage kann von dem Service-Provider-Servers 260 beispielsweise direkt oder über das mobile Endgerät 100 an den ID-Provider-Server 200 gesendet werden. Bei den auszulesenden Identitätsattributen handelt es sich beispielsweise um Identitätsattribute verschiedener auf dem mobilen Endgerät 100 gespeicherter elektronischer Identitäten.

Der ID-Provider-Server 200 umfasst beispielsweise einen Prozessor 242, einen Speicher 244 und eine Kommunikationsschnittstelle 250. In dem Speicher 244 sind Programminstruktionen 248 gespeichert, bei deren Ausführung der Prozessor 242 den Service-Provider-Server 260 zum Auslesen der in der Identitätsattributsanfrage spezifizierten Identitätsattribute aus einem Speicher des mobilen Endgeräts 100. Hierzu baut der ID-Provider-Server 200 einen kryptographisch gesicherten Kommunikationskanal über das mobile Endgerät 100 bzw. die Applikation 108 mit dem entfernten Sicherheitselement 292 des Servers 280 auf. Bei dem kryptographisch gesicherten Kommunikationskanal kann es sich beispielsweise um einen Ende-zu-Ende-verschlüsselten Kommunikationskanal handeln. Beispielsweise setzt dies eine gegenseitiges Authentifizieren von dem ID-Provider-Server 200 als auslesendem Computersystem und der die elektronischen Identitäten verwaltenden Applikationen 108 bzw. den entsprechenden elektronischen Identitäten durch das entfernte Sicherheitselement 292 des Servers 280 voraus. Für einen Lesezugriff auf die auszulesenden Identitätsattribute verwendet der ID-Provider-Server 200 die Applikationen 108 auf dem mobilen Endgerät 100, welches die elektronischen Identitäten mit den auszulesenden Identitätsattribute verwalten. Zur sichern Übertragung werden die auszulesenden Identitätsattribute von dem entfernte Sicherheitselement 292 des Servers 280 für das auslesende Computersystem 200 unverschlüsselt. Der ID-Provider-Server 200 als auslesendes Computersystem sendet eine entsprechende Zugriffsanfrage an das mobile Endgerät 100. Eine Leseberechtigung zum Auslesen der in der Identitätsattributsanfrage spezifizierten Identitätsattribute weist der ID-Provider-Server 200 beispielsweise mit dem Berechtigungszertifikat 246 nach. Das Berechtigungszertifikat 246 sendet das ID-Provider-Server 200 beispielsweise zusammen mit der Zugriffsanfrage. Das empfangene Berechtigungszertifikat 246 wird von dem mobilen Endgerät 100 beispielsweise im Zuge einer zentralen Authentifizierung validiert. Ferner setzt ein Lesezugriff des ID-Provider-Server 200 auf die in der Identitätsattributsanfrage spezifizierten Identitätsattribute beispielsweise eine Zustimmung des Nutzers des mobilen Endgeräts 100 voraus. Hierzu muss sich der Nutzer gegenüber dem ID-Anwendungsprogramm 108 erfolgreich authentisieren. Das mobile Endgerät 100 authentifiziert den Nutzer beispielsweise unter Verwendung des Sensors 120 und des Sicherheitselements 110 des Betriebssystems 106. Das Sicherheitselements 110 bestätigt dem entfernten Sicherheitselement 292 bzw. dem von diesem umfassten Schlüsselbund 294 die erfolgreiche Authentifizierung des Nutzers. Dies kann beispielsweise unter Verwendung eines Challenge-Response-Verfahrens erfolgen. Beispielsweise wird dem Nutzer über eine Anzeigevorrichtung der Nutzerschnittstelle 118 angezeigt, welche Identitätsattribut an den ID-Provider-Server 200 gesendet werden sollen, und dem Nutzer ermöglicht diese Auswahl zu bearbeiten. Beispielsweise kann der Nutzer selektieren, welche der angefragten Identitätsattribute tatsächlich gesendet werden. Auf einen erfolgreichen Nachweis der Leseberechtigung bzw. Authentifizierung des ID-Provider-Server 200 und eine erfolgreiche Nutzerauthentifizierung werden dem ID-Provider-Server 200 die freigegebenen Identitätsattribute unter Verwendung des entfernten Sicherheitselement 292 bereitgestellt bzw. zugesendet. Der ID-Provider-Server 200 signiert beispielsweise die empfangenen Identitätsattribute und sendet diese an den Service-Provider-Server 260.

## Bezugszeichenliste

| | |
|---|---|
| 100 | mobiles Endgerät |
| 102 | Prozessor |
| 104 | Speicher |
| 105 | ID-Client |
| 106 | Betriebssystem |
| 107 | ID-Verwaltungsmodul |
| 108 | Applikation |
| 109 | Identitätsattribute |
| 110 | Sicherheitselement |
| 113 | elektronische Identität |
| 118 | Nutzerschnittstelle |
| 120 | Authentifizierungssensor |
| 122 | Kommunikationsschnittstelle |
| 150 | Netzwerk |
| 170 | System |
| 200 | ID-Provider-Server |
| 202 | Prozessor |
| 204 | Speicher |
| 206 | kryptographischer Schlüssel |
| 208 | Programminstruktionen |
| 210 | Kommunikationsschnittstelle |
| 220 | Personalisierungsserver |
| 222 | Prozessor |
| 224 | Speicher |
| 226 | Berechtigungszertifikat |
| 228 | Programminstruktionen |
| 230 | Kommunikationsschnittstelle |
| 240 | Sicherheitsverwaltungsdienstserver |
| 242 | Prozessor |
| 244 | Speicher |
| 246 | Berechtigungszertifikat |
| 248 | Programminstruktionen |
| 250 | Kommunikationsschnittstelle |
| 260 | Service-Provider-Server |
| 262 | Prozessor |
| 264 | Speicher |
| 266 | Programminstruktionen |
| 270 | Kommunikationsschnittstelle |
| 280 | Server |
| 282 | Prozessor |
| 284 | Speicher |
| 285 | kryptographischer Schlüssel |
| 286 | symmetrischer Schlüssel |
| 288 | Programminstruktionen |
| 290 | Sicherheitsverwaltungsprogrammmodul |
| 292 | Sicherheitselement |
| 294 | Schlüsselbund |
| 296 | Kommunikationsschnittstelle |

## Patentansprüche

1. Verfahren zum Auslesen ein oder mehrerer Identitätsattribute (109) einer elektronischen Identität (113), wobei die elektronische Identität (113) auf einem mobilen Endgerät (100) gespeichert ist und von einer auf dem mobilen Endgerät (100) installierten Applikation (108) verwaltet wird, wobei die auszulesenden Identitätsattribute (109) in verschlüsselter Form auf dem mobilen Endgerät (100) gespeichert sind, wobei auf einem Server (280) ein entferntes Sicherheitselement (292) für die elektronische Identität (113) bereitgestellt wird, wobei der Server (280) mit dem mobilen Endgerät (100) über ein Netzwerk (150) kommuniziert,
wobei das Verfahren durch den Server (280) umfasst:

> • Empfangen der auszulesenden Identitätsattribute (109) von der Applikation (108), wobei die Identitätsattribute (109) unter Verwendung eines der elektronischen Identität (113) zugeordneten kryptographischen Schlüssels verschlüsselt sind,
> • Entschlüsseln der auszulesenden Identitätsattribute (109) durch das entfernte Sicherheitselement (292),
> • Verschlüsseln der entschlüsselten auszulesenden Identitätsattribute (109) unter Verwendung eines in dem entfernten Sicherheitselement (292) gespeicherten ephemeren symmetrischen kryptographischen Schlüssels (286), welchen sich das entfernte Sicherheitselement (292) mit einem auslesenden Computersystem (200) zur Kommunikationsverschlüsselung teilt,
> • Senden der unter Verwendung des ephemeren symmetrischen kryptographischen Schlüssels (286) verschlüsselten auszulesenden Identitätsattribute (109) an das auslesende Computersystem (200).

2. Verfahren nach Anspruch 1, wobei das Senden der unter Verwendung des ephemeren symmetrischen kryptographischen Schlüssels (286) verschlüsselten auszulesenden Identitätsattribute (109) an das auslesende Computersystem (200) ein Senden an die Applikation (108) zum Weiterleiten an das auslesende Computersystem (200) umfasst.

3. Verfahren nach einem der vorangehenden Ansprüche, wobei es sich bei dem der elektronischen Identität (113) zugeordneten kryptographischen Schlüssel um einen ersten symmetrischen kryptographischen Schlüssel (285) handelt, welcher in dem entfernten Sicherheitselement (292) gespeichert ist, oder wobei es sich bei dem der elektronischen Identität (113) zugeordneten kryptographischen Schlüssel um einen ersten öffentlichen kryptographischen Schlüssel eines ersten asymmetrischen Schlüsselpaars handelt, wobei ein erster privater Schlüssel (285) des asymmetrischen Schlüsselpaars in dem entfernten Sicherheitselement (292) gespeichert ist.

4. Verfahren nach einem der vorangehenden Ansprüche, wobei das Verfahren ferner ein Erzeugen des mit dem auslesenden Computersystem (200) geteilten ephemeren symmetrischen kryptographischen Schlüssels (286) umfasst,
wobei das entfernte Sicherheitselement (292) den ephemeren symmetrischen kryptographischen Schlüssel (286) vorzugsweise unter Verwendung eines mit dem auslesenden Computersystem (200) geteilten Geheimnisses und einer ersten Zufallszahl erzeugt.

5. Verfahren nach Anspruch 4 wobei das Erzeugen des mit dem auslesenden Computersystem (200) geteilten ephemeren symmetrischen kryptographischen Schlüssels (286) ein erfolgreiches Authentisieren der elektronischen Identität (113) gegenüber dem auslesenden Computersystem (200) unter Verwendung des entfernten Sicherheitselements (292) voraussetzt.

6. Verfahren nach Anspruch 5, wobei das Authentisieren der elektronischen Identität (113) gegenüber dem auslesenden Computersystem (200) durch den Server (280) umfasst:

> • Senden eines zweiten öffentlichen kryptographischen Schlüssels eines der elektronischen Identität (113) zugeordneten zweiten asymmetrischen Schlüsselpaars an das auslesende Computersystem (200), wobei ein zweiter privater kryptographischen Schlüssel des zweiten asymmetrischen Schlüsselpaars in dem entfernten Sicherheitselement (292) gespeichert ist,
> • Berechnen des mit dem auslesenden Computersystem (200) geteilten Geheimnisses durch das entfernte Sicherheitselement (292) unter Verwendung des zweiten privaten kryptographischen Schlüssels der elektronischen Identität (113) und eines ephemeren öffentlichen kryptographischen Schlüssels des auslesenden Computersystems (200),
> • Erzeugen der ersten Zufallszahl durch das entfernte Sicherheitselement (292),
> • Erzeugen eines gemeinsamen ephemeren Authentisierungsschlüssels zum Authentisieren von Informationen im Zuge von Kommunikationen gegenüber dem auslesenden Computersystem (200) unter Verwendung des geteilten Geheimnisses und der erzeugten ersten Zufallszahl,
> • Erzeugen eines Authentisierungstoken durch das entfernte Sicherheitselement (292) unter Verwendung des ephemeren Authentisierungsschlüssels und des ephemeren öffentlichen kryptographischen Schlüssels des auslesenden Computersystems (200) zum Authentisieren der elektronischen Identität (113) gegenüber dem auslesenden Computersystem (200),
• Senden der ersten Zufallszahl zusammen mit dem Authentisierungstoken zum Authentisieren der elektronischen Identität (113) gegenüber dem auslesenden Computersystem (200) an das auslesende Computersystem (200).

7. Verfahren nach Anspruch 6, wobei das Senden des zweiten öffentlichen kryptographischen Schlüssels der elektronischen Identität (113) an das auslesende Computersystem (200) ein Senden an die Applikation (108) zum Weiterleiten an das auslesende Computersystem (200) umfasst, und/oder

wobei das Senden der ersten Zufallszahl zusammen mit dem Authentisierungstoken an das auslesende Computersystem (200) ein Senden an die Applikation (108) zum Weiterleiten an das auslesende Computersystem (200) umfasst, und/oder

wobei das Authentisieren der elektronischen Identität (113) gegenüber dem auslesenden Computersystem (200) ein erfolgreiches Authentifizieren des auslesenden Computersystems (200) durch die Applikation (108) voraussetzt,

wobei der Server (280) den ephemeren öffentlichen kryptographischen Schlüssel des auslesenden Computersystems (200) vorzugsweise von der Applikation (108) empfängt, welche den ephemeren öffentlichen kryptographischen Schlüssel im Zuge des Authentifizierens des auslesenden Computersystems (200) empfängt und an den Server (280) weiterleitet, wobei der Server (280) in Antwort auf das Senden des der elektronischen Identität (113) zugeordneten zweiten öffentlichen kryptographischen Schlüssels von dem auslesenden Computersystem (200) vorzugsweise eine zweite Kopie des ephemeren öffentlichen kryptographischen Schlüssels des auslesenden Computersystems (200) empfängt, welche der Server (280) mit der ersten Kopie des ephemeren öffentlichen kryptographischen Schlüssels des auslesenden Computersystems (200) vergleicht, welche die Applikation (108) im Zuge des Authentifizierens des auslesenden Computersystems (200) empfangen und an den Server (280) weitergeleitet hat, wobei eine Übereinstimmung beider Kopien eine Voraussetzung für das Berechnen des geteilten Geheimnisses ist, und/oder

wobei das Verfahren ferner ein Berechnen eines Prüfcodes der entschlüsselten auszulesenden Identitätsattribute (109) unter Verwendung des ephemeren Authentisierungsschlüssel umfasst, welcher zusammen mit den unter Verwendung des ephemeren symmetrischen kryptographischen Schlüssels (286) verschlüsselten auszulesenden Identitätsattribute (109) an das auslesende Computersystem (200) gesendet wird,

wobei es sich bei dem ephemeren Authentisierungsschlüssel vorzugsweise um einen Schlüssel zum Erzeugen eines Message Authentication Codes und es sich bei dem Prüfcode um einen unter Verwendung des ephemeren Authentisierungsschlüssels erzeugten MAC-Code der auszulesenden Identitätsattribute (109) handelt, und/oder

wobei es sich bei dem Authentisierungstoken um einen unter Verwendung des ephemeren Authentisierungsschlüssels erzeugten MAC-Code der ersten Zufallszahl handelt.

8. Verfahren nach einem der Anspruch 5 bis 7, wobei das Authentisieren der elektronischen Identität (113) gegenüber dem auslesenden Computersystem (200) ferner ein erfolgreiches Authentifizieren der Applikation (108) durch den Server (280) voraussetzt.

9. Verfahren nach Anspruch 8, wobei das Authentifizieren durch den Server (280) umfasst:

• Empfangen einer Challenge-Anfrage von der Applikation (108),
• Erzeugen einer zweiten Zufallszahl als Challenge durch das entfernte Sicherheitselement (292),
• Senden der erzeugten Challenge in Antwort auf die Challenge-Anfrage an die Applikation (108),
• Empfangen einer Response in Antwort auf das Senden der Challenge, wobei es sich bei der Response um die unter Verwendung eines der elektronischen Identität (113) zugeordneten zweiten symmetrischen kryptographischen Schlüssels (286) verschlüsselte Challenge handelt,
• Validieren der Response durch das entfernte Sicherheitselement (292) unter Verwendung des der elektronischen Identität (113) zugeordneten zweiten symmetrischen kryptographischen Schlüssels (286), der in dem entfernten Sicherheitselement (292) gespeichert ist,

wobei das Erzeugen der Response durch die Applikation (108) vorzugsweise ein erfolgreiches Authentifizieren des Nutzers durch das mobile Endgerät (100) voraussetzt.

10. Verfahren zum Auslesen ein oder mehrerer Identitätsattribute (109) einer elektronischen Identität (113), wobei die elektronische Identität (113) auf einem mobilen Endgerät (100) gespeichert ist und von einer auf dem mobilen Endgerät (100) installierten Applikation (108) verwaltet wird, wobei die auszulesenden Identitätsattribute (109) in verschlüsselter Form auf dem mobilen Endgerät (100) gespeichert sind, wobei auf einem Server (280) ein entferntes Sicherheitselement (292) für die elektronische Identität (113) bereitgestellt wird, wobei der Server (280) mit dem mobilen Endgerät (100) über ein Netzwerk (150) kommuniziert,
wobei das Verfahren durch die Applikation (108) auf dem mobilen Endgerät (100) umfasst:

• Empfangen einer Leseanfrage eines auslesenden Computersystems (200),
• Senden der auszulesenden Identitätsattribute (109) an den Server (280), wobei die Identitätsattribute (109) unter Verwendung eines der elektronischen Identität (113) zugeordneten kryptographischen Schlüssels (285) verschlüsselt sind,
• in Antwort auf das Senden der auszulesenden Identitätsattribute (109), Empfangen der unter Verwendung eines ephemeren symmetrischen kryptographischen Schlüssels (286) verschlüsselten auszulesenden Identitätsattribute (109),
• Weiterleiten der unter Verwendung des ephemeren symmetrischen kryptographischen Schlüssels (286) verschlüsselten auszulesenden Identitätsattribute (109) an das auslesende Computersystem (200).

11. Verfahren nach Anspruch 10, wobei das Verfahren ferner ein Authentifizieren des auslesenden Computersystems (200) durch die Applikation (108) umfasst, wobei die Applikation (108) im Zuge des Authentifizierens des auslesenden Computersystems (200) einen ephemeren öffentlichen kryptographischen Schlüssel des auslesenden Computersystems (200) empfängt und an den Server (280) weiterleitet, und/oder
wobei die Applikation (108) die unter Verwendung des ephemeren symmetrischen kryptographischen Schlüssels (286) verschlüsselten auszulesenden Identitätsattribute (109) zusammen mit einem Prüfcodes der entschlüsselten auszulesenden Identitätsattribute (109) empfängt und an das auslesende Computersystem (200) weiterleitet.

12. Verfahren nach Anspruch 11, wobei das Verfahren ferner ein Authentisieren der elektronischen Identität (113) gegenüber dem auslesenden Computersystem (200) umfasst, wobei das Authentisieren der elektronischen Identität (113) ein Empfang eines öffentlichen kryptographischen Schlüssels eines der elektronischen Identität (113) zugeordneten asymmetrischen Schlüsselpaars von dem Server (280) durch die Applikation (108) umfasst, welche den empfangenen öffentlichen kryptographischen Schlüssel der elektronischen Identität (113) an das auslesende Computersystem (200) weiterleitet,

wobei das Authentisieren der elektronischen Identität (113) vorzugsweise ferner ein Empfangen einer ersten von dem entfernten Sicherheitselement (292) erzeugten Zufallszahl zusammen mit einem von dem entfernten Sicherheitselement (292) erzeugten Authentisierungstoken von dem Server (280) durch die Applikation (108) umfasst, welche die empfangenen Zufallszahl zusammen mit dem Authentifizierungstoken an das auslesende Computersystem (200) weiterleitet, und/oder
wobei die Applikation (108) auf das Weiterleiten des der elektronischen Identität (113) zugeordneten öffentlichen kryptographischen Schlüssels von dem auslesenden Computersystem (200) eine zweite Kopie des ephemeren öffentlichen kryptographischen Schlüssels des auslesenden Computersystems (200) empfängt, welche die Applikation (108) zum Vergleichen mit der ersten Kopie des ephemeren öffentlichen kryptographischen Schlüssels des auslesenden Computersystems (200) an den Server (280) weiterleitet, und/oder
wobei das Authentisieren der elektronischen Identität (113) gegenüber dem auslesenden Computersystem (200) ferner ein erfolgreiches Authentisieren der Applikation (108) gegenüber dem Server (280) voraussetzt,
wobei das Authentisieren der Applikation (108) gegenüber dem Server (280) vorzugsweise umfasst:

• Sende einer Challenge-Anfrage an den Server (280),
• Empfangen einer durch das entfernte Sicherheitselement (292) erzeugten zweiten Zufallszahl als Challenge von dem Server (280) in Antwort auf die Challenge-Anfrage,
• Erzeugen einer Response, wobei die empfangende Challenge durch ein Sicherheitselement (110) des Betriebssystems (106) des mobilen Endgeräts (100) unter Verwendung eines der elektronischen Identität (113) zugeordneten symmetrischen kryptographischen Schlüssels (286) verschlüsselt wird, wobei der der elektronischen Identität (113) zugeordneten symmetrischen kryptographischen Schlüssel (286) in dem Sicherheitselement (110) des Betriebssystems (106) des mobilen Endgeräts (100) gespeichert ist,
• Senden der erzeugten Response in Antwort auf die Challenge an den Server (280).

13. Server (280), welcher ein entferntes Sicherheitselement (292) für eine elektronische Identität (113) bereitstellt, die auf einem mobilen Endgerät (100) gespeichert ist und von einer auf dem mobilen Endgerät (100) installierten Applikation (108) verwaltet wird, wobei der Server (280) ferner einen Prozessor (282), einen Speicher (284) mit ausführbaren Programminstruktionen (288) und eine Kommunikationsschnittstelle (296) zur Kommunikation mit dem mobilen Endgerät (100) über ein Netzwerk (150) umfasst,

wobei der Prozessor (282) dazu konfiguriert ist, auf ein Ausführen der Programminstruktionen (288) den Server (280) zum Ausführen eines Verfahrens zum Auslesen ein oder mehrerer Identitätsattribute (109) der elektronischen Identität (113) zu steuern,
wobei das Verfahren umfasst:

• Empfangen der auszulesenden Identitätsattribute (109) von der Applikation (108), wobei die Identitätsattribute (109) unter Verwendung eines der elektronischen Identität (113) zugeordneten kryptographischen Schlüssels (285) verschlüsselt sind,
• Entschlüsseln der auszulesenden Identitätsattribute (109) durch das entfernte Sicherheitselement (292),
• Verschlüsseln der entschlüsselten auszulesenden Identitätsattribute (109) unter Verwendung eines in dem entfernten Sicherheitselement (292) gespeicherten ephemeren symmetrischen kryptographischen Schlüssels (286), welchen sich das entfernte Sicherheitselement (292) mit einem auslesenden Computersystem (200) zur Kommunikationsverschlüsselung teilt,
• Senden der unter Verwendung des ephemeren symmetrischen kryptographischen Schlüssels (286) verschlüsselten auszulesenden Identitätsattribute (109) an das auslesende Computersystem (200).

14. Mobiles Endgerät (100), wobei auf dem mobilen Endgerät (100) elektronische Identität (113) gespeichert ist, die von einer auf dem mobilen Endgerät (100) installierten Applikation (108) verwaltet wird, wobei das mobile Endgerät (100) einen Prozessor (102), einen Speicher (104) mit ausführbaren Programminstruktionen und eine Kommunikationsschnittstelle (122) zur Kommunikation mit einem Server (280) über ein Netzwerk (150) umfasst, welcher ein entferntes Sicherheitselement (292) für die elektronische Identität (113) bereitstellt,

wobei der Prozessor (102) dazu konfiguriert ist, auf ein Ausführen der Programminstruktionen das mobile Endgerät (100) zum Ausführen eines Verfahrens zum Auslesen ein oder mehrerer Identitätsattribute (109) der elektronischen Identität (113) zu steuern,
wobei das Verfahren durch die Applikation (108) auf dem mobilen Endgerät (100) umfasst:

• Empfangen einer Leseanfrage eines auslesenden Computersystems (200),
• Senden der auszulesenden Identitätsattribute (109) an den Server (280), wobei die Identitätsattribute (109) unter Verwendung eines der elektronischen Identität (113) zugeordneten kryptographischen Schlüssels verschlüsselt sind,
• in Antwort auf das Senden der auszulesenden Identitätsattribute (109), Empfangen der unter Verwendung eines ephemeren symmetrischen kryptographischen Schlüssels (286) verschlüsselten auszulesenden Identitätsattribute (109),
• Weiterleiten der unter Verwendung des ephemeren symmetrischen kryptographischen Schlüssels (286) verschlüsselten auszulesenden Identitätsattribute (109) an das auslesende Computersystem (200).

15. Verteiltes System (170) umfassend ein mobiles Endgerät (100) nach Anspruch 14 und einen Server (280) mit einem Sicherheitselement nach Anspruch 13.

**Claims**

1. A method for reading out one or more identity attributes (109) of an electronic identity (113), wherein the electronic identity (113) is stored on a mobile terminal (100) and is managed by an application (108) installed on the mobile terminal (100), wherein the identity attributes (109) to be read out are stored in encrypted form on the mobile terminal (100), wherein a remote security element (292) for the electronic identity (113) is provided on a server (280), wherein the server (280) communicates with the mobile terminal (100) via a network (150), wherein the method comprises, by the server (280):

• receiving, by the application (108), the identity attributes (109) to be read out, wherein the identity attributes (109) are encrypted using a cryptographic key assigned to the electronic identity (113),
• decrypting, by the remote security element (292), the identity attributes (109) to be read out,
• encrypting the decrypted identity attributes (109) to be read out by using an ephemeral symmetric cryptographic key (286), which is stored in the remote security element (292) and which shares the remote security element (292) with a computer system (200) to be read out for communication encryption,

• sending the encrypted identity attributes (109) to be read out, encrypted using the ephemeral symmetric cryptographic key (286), to the reading computer system (200).

2. The method according to claim 1, wherein sending the identity attributes (109) to be read out, encrypted using the ephemeral symmetric cryptographic key (286), to the reading computer system (200) comprises sending them to the application (108) for forwarding to the reading computer system (200).

3. The method according to any one of the preceding claims, wherein the cryptographic key assigned to the electronic identity (113) is a first symmetric cryptographic key (285) stored in the remote security element (292), or wherein the cryptographic key assigned to the electronic identity (113) is a first public cryptographic key of a first asymmetric key pair, wherein a first private key (285) of the asymmetric key pair is stored in the remote security element (292).

4. The method according to any one of the preceding claims, wherein the method further comprises generating the ephemeral symmetric cryptographic key (286) shared with the reading computer system (200),

wherein the remote security element (292) generates the ephemeral symmetric cryptographic key (286) preferably using a secret shared with the reading computer system (200) and a first random number.

5. The method according to claim 4, wherein generating the ephemeral symmetric cryptographic key (286) shared with the reading computer system (200) requires successfully authenticating the electronic identity (113) to the reading computer system (200) using the remote security element (292).

6. The method according to claim 5, wherein authenticating the electronic identity (113) to the reading computer system (200) by the server (280) comprises:

• sending a second public cryptographic key of a second asymmetric key pair assigned to the electronic identity (113) to the reading computer system (200), wherein a second private cryptographic key of the second asymmetric key pair is stored in the remote security element (292),
• calculating the secret shared with the reading computer system (200) by the remote security element (292) using the second private cryptographic key of the electronic identity (113) and an ephemeral public cryptographic key of the reading computer system (200),
• generating the first random number by the remote security element (292),
• generating a shared ephemeral authentication key for authenticating information in the course of communications to the reading computer system (200) using the shared secret and the generated first random number,
• generating an authentication token by the remote security element (292) using the ephemeral authentication key and the ephemeral public cryptographic key of the reading computer system (200) for authenticating the electronic identity (113) to the reading computer system (200),
• sending the first random number together with the authentication token to the reading computer system (200) for authenticating the electronic identity (113) to the reading computer system (200).

7. The method according to claim 6, wherein sending the second public cryptographic key of the electronic identity (113) to the reading computer system (200) comprises sending it to the application (108) for forwarding to the reading computer system (200), and/or

wherein sending the first random number together with the authentication token to the reading computer system (200) comprises sending to the application (108) for forwarding to the reading computer system (200), and/or
wherein the authentication of the electronic identity (113) to the reading computer system (200) requires a successful authentication of the reading computer system (200) by the application (108),
wherein the server (280) receives the ephemeral public cryptographic key of the reading computer system (200) preferably from the application (108), which receives the ephemeral public cryptographic key in the course of authenticating the reading computer system (200) and forwards it to the server (280), wherein the server (280), in response to sending the second public cryptographic key assigned to the electronic identity (113), receives from the reading computer system (200) preferably a second copy of the ephemeral public cryptographic key of the reading computer system (200), which the server (280) compares with the first copy of the ephemeral public cryptographic key of the reading computer system (200), which the application (108) has received in the course of authenticating the reading computer system (200) and forwarded to the server (280), wherein a match between the two copies is a prerequisite for calculating the shared secret, and/or
wherein the method further comprises calculating a check code of the decrypted identity attributes (109) to be read out using the ephemeral authentication key, which is sent to the reading computer system (200) together with the identity attributes (109) to be read out encrypted using the ephemeral symmetric cryptographic key (286),
wherein the ephemeral authentication key is preferably a key for generating a message authentication code, and the check code is a MAC code of the identity attributes (109) to be read out, generated using the ephemeral authentication key, and/or
wherein the authentication token is a MAC code of the first random number generated using the ephemeral authentication key.

8. The method according to any one of claims 5 to 7, wherein the authentication of the electronic identity (113) to the reading computer system (200) further requires a successful authentication of the application (108) by the server (280).

9. The method according to claim 8, wherein the authentication by the server (280) comprises:

   • receiving a challenge request from the application (108),
   • generating a second random number as a challenge by the remote security element (292),
   • sending the generated challenge to the application (108) in response to the challenge request,
   • receiving a response in response to sending the challenge, wherein the response is the challenge encrypted using a second symmetric cryptographic key (286) assigned to the electronic identity (113),
   • validating the response by the remote security element (292) using the second symmetric cryptographic key (286) assigned to the electronic identity (113) and stored in the remote security element (292),
   wherein the generation of the response by the application (108) preferably requires successful authentication of the user by the mobile terminal (100).

10. A method for reading out one or more identity attributes (109) of an electronic identity (113), wherein the electronic identity (113) is stored on a mobile terminal (100) and is managed by an application (108) installed on the mobile terminal (100), wherein the identity attributes (109) to be read out are stored in encrypted form on the mobile terminal (100), wherein a remote security element (292) for the electronic identity (113) is provided on a server (280), wherein the server (280) communicates with the mobile terminal (100) via a network (150),
wherein the method by the application (108) on the mobile terminal (100) comprises:

   • receiving a read request from a reading computer system (200),
   • sending the identity attributes (109) to be read to the server (280), wherein the identity attributes (109) are encrypted using a cryptographic key (285) assigned to the electronic identity (113),
   • in response to sending the identity attributes (109) to be read out, receiving the identity attributes (109) to be read out encrypted using an ephemeral symmetric cryptographic key (286),
   • forwarding the identity attributes (109) to be read out, encrypted using the ephemeral symmetric cryptographic key (286), to the reading computer system (200).

11. The method according to claim 10, wherein the method further comprises authenticating the reading computer system (200) by the application (108), wherein the application (108) receives an ephemeral public cryptographic key of the reading computer system (200) in the course of authenticating the reading computer system (200) and forwards it to the server (280), and/or
wherein the application forwards the identity attributes (109) to be read out, encrypted using the ephemeral symmetric cryptographic key (286), together with a check code of the decrypted identity attributes (109) to be read out and forwards them to the reading computer system (200).

12. The method according to claim 11, wherein the method further comprises authenticating the electronic identity (113) to the reading computer system (200), wherein authenticating the electronic identity (113) comprises receiving a public cryptographic key of an asymmetric key pair assigned to the electronic identity (113) from the server (280) by the application (108), which forwards the received public cryptographic key of the electronic identity (113) to the reading computer system (200),

   wherein authenticating the electronic identity (113) preferably further comprises receiving, by the application (108), a first random number generated by the remote security element (292) together with an authentication token generated by the remote security element (292) from the server (280), which application forwards the received random number together with the authentication token to the reading computer system (200), and/or

wherein the application (108), upon forwarding the public cryptographic key assigned to the electronic identity (113), receives from the reading computer system (200) a second copy of the ephemeral public cryptographic key of the reading computer system (200), which the application (108) forwards to the server (280) for comparison with the first copy of the ephemeral public cryptographic key of the reading computer system (200), and/or

wherein the authentication of the electronic identity (113) to the reading computer system (200) further requires a successful authentication of the application (108) to the server (280), wherein the authentication of the application (108) to the server (280) preferably comprises:

- sending a challenge request to the server (280),
- receiving a second random number generated by the remote security element (292) as a challenge from the server (280) in response to the challenge request,
- generating a response, wherein the receiving challenge is encrypted by a security element (110) of the operating system (106) of the mobile terminal (100) using a symmetric cryptographic key (286) assigned to the electronic identity (113), wherein the symmetric cryptographic key (286) assigned to the electronic identity (113) is stored in the security element (110) of the operating system (106) of the mobile terminal (100),
- sending the response generated in response to the challenge to the server (280).

13. A server (280), which provides a remote security element (292) for an electronic identity (113) which is stored on a mobile terminal (100) and managed by an application (108) installed on the mobile terminal (100), wherein the server (280) further comprises a processor (282), a memory (284) with executable program instructions (288) and a communication interface (296) for communicating with the mobile terminal (100) via a network (150),

wherein the processor (282) is configured to, upon execution of the program instructions (288), control the server (280) to execute a method for reading one or more identity attributes (109) of the electronic identity (113), wherein the method comprises:

- receiving the identity attributes (109) to be read out from the application (108), wherein the identity attributes (109) are encrypted using a cryptographic key (285) assigned to the electronic identity (113),
- decrypting, by the remote security element (292), the identity attributes (109) to be read out,
- encrypting the decrypted identity attributes (109) to be read out using an ephemeral symmetric cryptographic key (286) stored in the remote security element (292), which the remote security element (292) shares with a reading computer system (200) for communication encryption,
- sending the identity attributes (109) to be read out, encrypted using the ephemeral symmetric cryptographic key (286), to the reading computer system (200).

14. A mobile terminal (100), wherein the mobile terminal (100) has stored thereon an electronic identity (113) managed by an application (108) installed on the mobile terminal (100), wherein the mobile terminal (100) comprises a processor (102), a memory (104) having executable program instructions, and a communication interface (122) for communicating with a server (280) over a network (150), which provides a remote security element (292) for the electronic identity (113),

wherein the processor (102) is configured to control, upon execution of the program instructions, the mobile terminal (100) to execute a method for reading one or more identity attributes (109) of the electronic identity (113), wherein the method by the application (108) on the mobile terminal (100) comprises:

- receiving a read request from a reading computer system (200),
- sending the identity attributes (109) to be read out to the server (280), wherein the identity attributes (109) are encrypted using a cryptographic key assigned to the electronic identity (113),
- in response to sending the identity attributes (109) to be read out, receiving the identity attributes (109) to be read out encrypted using an ephemeral symmetric cryptographic key (286),
- forwarding the identity attributes (109) to be read out, encrypted using the ephemeral symmetric cryptographic key (286), to the reading computer system (200).

15. A distributed system (170) comprising a mobile terminal (100) according to claim 14 and a server (280) with a security element according to claim 13.

## Revendications

1. Procédé de lecture d'un ou de plusieurs attributs d'identité (109) d'une identité électronique (113), dans lequel l'identité électronique (113) est stockée sur un terminal mobile (100) et est gérée par une application (108) installée sur le terminal mobile (100), dans lequel les attributs d'identité (109) à faire lire sont stockés sous forme chiffrée sur le terminal mobile (100), dans lequel un élément de sécurité distant (292) pour l'identité électronique (113) est fourni sur un serveur (280), dans lequel le serveur (280) communique avec le terminal mobile (100) par l'intermédiaire d'un réseau (150),
dans lequel le procédé comprend, par le serveur (280), les étapes consistant à :

   • faire recevoir, par l'application (108), les attributs d'identité (109) à faire lire, dans lequel les attributs d'identité (109) sont chiffrés en utilisant une clé cryptographique attribuée à l'identité électronique (113),
   • faire déchiffrer, par l'élément de sécurité distant (292), les attributs d'identité (109) à faire lire,
   • chiffrer les attributs d'identité déchiffrés (109) à faire lire en utilisant une clé cryptographique symétrique éphémère (286), qui est stockée dans l'élément de sécurité distant (292) et qui partage l'élément de sécurité distant (292) avec un système informatique (200) à faire lire pour le chiffrement de la communication,
   • envoyer les attributs d'identité (109) chiffrés à faire lire, chiffrés en utilisant la clé cryptographique symétrique éphémère (286), au système informatique de lecture (200).

2. Procédé selon la revendication 1, dans lequel l'étape consistant à envoyer les attributs d'identité (109) à faire lire, chiffrés en utilisant la clé cryptographique symétrique éphémère (286), au système informatique de lecture (200) comprend une étape consistant à les envoyer à l'application (108) pour les transférer au système informatique de lecture (200).

3. Procédé selon l'une quelconque des revendications précédentes, dans lequel la clé cryptographique attribuée à l'identité électronique (113) est une première clé cryptographique symétrique (285) stockée dans l'élément de sécurité distant (292), ou dans lequel la clé cryptographique attribuée à l'identité électronique (113) est une première clé cryptographique publique d'une paire cryptographique publique d'une première paire de clés asymétriques, dans lequel une première clé privée (285) de la paire de clés asymétriques est stockée dans l'élément de sécurité distant (292).

4. Procédé selon l'une quelconque des revendications précédentes, dans lequel le procédé comprend en outre une étape consistant à générer la clé cryptographique symétrique éphémère (286) partagée avec le système informatique de lecture (200),
dans lequel l'élément de sécurité distant (292) génère la clé cryptographique symétrique éphémère (286) préférentiellement en utilisant un secret partagé avec le système informatique de lecture (200) et un premier nombre aléatoire.

5. Procédé selon la revendication 4, dans lequel l'étape consistant à générer la clé cryptographique symétrique éphémère (286) partagée avec le système informatique de lecture (200) exige une étape consistant à réussir à authentifier l'identité électronique (113) vis-à-vis du système informatique de lecture (200) en utilisant l'élément de sécurité distant (292).

6. Procédé selon la revendication 5, dans lequel l'étape consistant à faire authentifier l'identité électronique (113) vis-à-vis du système informatique de lecture (200) par le serveur (280) comprend les étapes consistant à :

   • envoyer une seconde clé cryptographique publique d'une seconde paire de clés asymétriques attribuée à l'identité électronique (113) au système informatique de lecture (200), dans lequel une seconde clé cryptographique privée de la seconde paire de clés asymétriques est stockée dans l'élément de sécurité distant (292),
   • faire calculer le secret partagé avec le système informatique de lecture (200) par l'élément de sécurité distant (292) en utilisant la seconde clé cryptographique privée de l'identité électronique (113) et une clé cryptographique publique éphémère du système informatique de lecture (200),
   • faire générer le premier nombre aléatoire par l'élément de sécurité distant (292),
   • générer une clé d'authentification éphémère partagée pour authentifier des informations au cours des communications avec le système informatique de lecture (200) en utilisant le secret partagé et le premier nombre aléatoire généré,
   • faire générer un jeton d'authentification par l'élément de sécurité distant (292) en utilisant la clé d'authentification éphémère et la clé cryptographique publique éphémère du système informatique de lecture (200) pour authentifier l'identité électronique (113) vis-à-vis du système informatique de lecture (200),
   • envoyer le premier nombre aléatoire conjointement avec le jeton d'authentification au système informatique de lecture (200) pour authentifier l'identité électronique (113) vis-à-vis du système informatique de lecture (200).

7. Procédé selon la revendication 6, dans lequel l'étape consistant à envoyer la seconde clé cryptographique publique de l'identité électronique (113) au système informatique de lecture (200) comprend une étape consistant à l'envoyer à l'application (108) pour la transférer au système informatique de lecture (200), et/ou

dans lequel l'étape consistant à envoyer le premier nombre aléatoire conjointement avec le jeton d'authentification au système informatique de lecture (200) comprend une étape consistant à envoyer à l'application (108) pour transférer au système informatique de lecture (200), et/ou dans lequel l'authentification de l'identité électronique (113) vis-à-vis du système informatique de lecture (200) exige une authentification réussie du système informatique de lecture (200) par l'application (108),

dans lequel le serveur (280) reçoit la clé cryptographique publique éphémère du système informatique de lecture (200) préférentiellement depuis l'application (108), qui reçoit la clé cryptographique publique éphémère au cours de l'étape consistant à authentifier le système informatique de lecture (200) et la transfère au serveur (280), dans lequel le serveur (280), en réponse à l'étape consistant à envoyer la seconde clé cryptographique publique attribuée à l'identité électronique (113), reçoit depuis le système informatique de lecture (200) préférentiellement une seconde copie de la clé cryptographique publique éphémère du système informatique de lecture (200), que le serveur (280) compare à la première copie de la clé cryptographique publique éphémère du système informatique de lecture (200), que l'application (108) a reçue au cours de l'étape consistant à authentifier le système informatique de lecture (200) et transférée au serveur (280), dans lequel une correspondance entre les deux copies est un prérequis pour calculer le secret partagé, et/ou

dans lequel le procédé comprend en outre une étape consistant à calculer un code de contrôle des attributs d'identité déchiffrés (109) à faire lire en utilisant la clé d'authentification éphémère, qui est envoyée au système informatique de lecture (200) conjointement avec les attributs d'identité (109) à faire lire chiffrés en utilisant la clé cryptographique symétrique éphémère (286),

dans lequel la clé d'authentification éphémère est préférentiellement une clé destinée à générer un code d'authentification de message, et le code de contrôle est un code MAC des attributs d'identité (109) à faire lire, générés en utilisant la clé d'authentification éphémère, et/ou dans lequel le jeton d'authentification est un code MAC du premier nombre aléatoire généré en utilisant la clé d'authentification éphémère.

8. Procédé selon l'une quelconque des revendications 5 à 7, dans lequel l'authentification de l'identité électronique (113) vis-à-vis du système informatique de lecture (200) exige en outre une authentification réussie de l'application (108) par le serveur (280).

9. Procédé selon la revendication 8, dans lequel l'authentification par le serveur (280) comprend les étapes consistant à :

• recevoir une requête de contestation depuis l'application (108),
• faire générer un second nombre aléatoire en tant que contestation par l'élément de sécurité distant (292),
• envoyer la contestation générée à l'application (108) en réponse à la requête de contestation,
• recevoir une réponse en réponse à l'étape consistant à envoyer la contestation, dans lequel la réponse est la contestation chiffrée en utilisant une seconde clé cryptographique symétrique (286) attribuée à l'identité électronique (113),
• faire valider la réponse par l'élément de sécurité distant (292) en utilisant la seconde clé cryptographique symétrique (286) attribuée à l'identité électronique (113) et stockée dans l'élément de sécurité distant (292),

dans lequel la génération de la réponse par l'application (108) exige préférentiellement une authentification réussie de l'utilisateur par le terminal mobile (100).

10. Procédé de lecture d'un ou de plusieurs attributs d'identité (109) d'une identité électronique (113), dans lequel l'identité électronique (113) est stockée sur un terminal mobile (100) et est gérée par une application (108) installée sur le terminal mobile (100), dans lequel les attributs d'identité (109) à faire lire sont stockés sous forme chiffrée sur le terminal mobile (100), dans lequel un élément de sécurité distant (292) pour l'identité électronique (113) est fourni sur un serveur (280), dans lequel le serveur (280) communique avec le terminal mobile (100) par l'intermédiaire d'un réseau (150),

dans lequel le procédé par l'application (108) sur le terminal mobile (100) comprend les étapes consistant à :

• recevoir une requête de lecture depuis un système informatique de lecture (200),
• envoyer les attributs d'identité (109) à faire lire au serveur (280), dans lequel les attributs d'identité (109) sont chiffrés en utilisant une clé cryptographique (285) attribuée à l'identité électronique (113),

• en réponse à l'étape consistant à envoyer les attributs d'identité (109) à faire lire, recevoir les attributs d'identité (109) à faire lire chiffrés en utilisant une clé cryptographique symétrique éphémère (286),

• transférer les attributs d'identité (109) à faire lire, chiffrés en utilisant la clé cryptographique symétrique éphémère (286), au système informatique de lecture (200).

11. Procédé selon la revendication 10, dans lequel le procédé comprend en outre une étape consistant à faire authentifier le système informatique de lecture (200) par l'application (108), dans lequel l'application (108) reçoit une clé cryptographique publique éphémère du système informatique de lecture (200) au cours de l'étape consistant à authentifier le système informatique de lecture (200) et la transfère au serveur (280), et/ou

dans lequel l'application transfère les attributs d'identité (109) à faire lire, chiffrés en utilisant la clé cryptographique symétrique éphémère (286), conjointement avec un code de contrôle des attributs d'identité (109) déchiffrés à faire lire et les transfère au système informatique de lecture (200).

12. Procédé selon la revendication 11, dans lequel le procédé comprend en outre une étape consistant à authentifier l'identité électronique (113) vis-à-vis du système informatique de lecture (200), dans lequel l'étape consistant à authentifier l'identité électronique (113) comprend une étape consistant à recevoir une clé cryptographique publique d'une paire de clés asymétriques attribuée à l'identité électronique (113) depuis le serveur (280) par l'application (108), qui transfère la clé cryptographique publique reçue de l'identité électronique (113) au système informatique de lecture (200),

dans lequel l'étape consistant à authentifier l'identité électronique (113) comprend en outre préférentiellement une étape consistant à faire recevoir, par l'application (108), un premier nombre aléatoire généré par l'élément de sécurité distant (292) conjointement avec un jeton d'authentification généré par l'élément de sécurité distant (292) depuis le serveur (280), laquelle application transfère le nombre aléatoire reçu conjointement avec le jeton d'identification au système informatique de lecture (200), et/ou dans lequel l'application (108), lors de l'étape consistant à transférer la clé cryptographique publique attribuée à l'identité électronique (113), reçoit depuis le système informatique de lecture (200) une seconde copie de la clé cryptographique publique éphémère du système informatique de lecture (200), que l'application (108) transfère au serveur (280) pour comparaison avec la première copie de la clé cryptographique publique éphémère du système informatique de lecture (200), et/ou

dans lequel l'authentification de l'identité électronique (113) vis-à-vis du système informatique de lecture (200) exige en outre une authentification réussie de l'application (108) au serveur (280),

dans lequel l'authentification de l'application (108) vis-à-vis du serveur (280) comprend préférentiellement les étapes consistant à :

• envoyer une requête de contestation au serveur (280),

• recevoir un second nombre aléatoire généré par l'élément de sécurité distant (292) en tant que contestation depuis le serveur (280) en réponse à la requête de contestation,

• générer une réponse, dans lequel l'étape consistant à recevoir la contestation est chiffrée par un élément de sécurité (110) du système d'exploitation (106) du terminal mobile (100) en utilisant une clé cryptographique symétrique (286) attribuée à l'identité électronique (113), dans lequel la clé cryptographique symétrique (286) attribuée à l'identité électronique (113) est stockée dans l'élément de sécurité (110) du système d'exploitation (106) du terminal mobile (100),

• envoyer la réponse générée en réponse à la contestation au serveur (280).

13. Serveur (280), qui fournit un élément de sécurité distant (292) pour une identité électronique (113) qui est stockée sur un terminal mobile (100) et gérée par une application (108) installée sur le terminal mobile (100), dans lequel le serveur (280) comprend en outre un processeur (282), une mémoire (284) avec des instructions de programme exécutables (288) et une interface de communication (296) pour communiquer avec le terminal mobile (100) par l'intermédiaire d'un réseau (150),

dans lequel le processeur (282) est configuré pour, lors de l'exécution des instructions de programme (288), commander le serveur (280) pour exécuter un procédé destiné à lire un ou plusieurs attributs d'identité (109) de l'identité électronique (113),

dans lequel le procédé comprend les étapes consistant à :

• recevoir les attributs d'identité (109) à faire lire depuis l'application (108), dans lequel les attributs d'identité (109) sont chiffrés en utilisant une clé cryptographique (285) attribuée à l'identité électronique (113),

• faire déchiffrer, par l'élément de sécurité distant (292), les attributs d'identité (109) à faire lire,

• chiffrer les attributs d'identité (109) déchiffrés à faire lire en utilisant une clé cryptographique symétrique éphémère (286) stockée dans l'élément de sécurité distant (292), que l'élément de sécurité distant (292) partage avec un système informatique de lecture (200) pour le chiffrement de la communication,

• envoyer les attributs d'identité (109) à faire lire, chiffrés en utilisant la clé cryptographique symétrique éphémère (286), au système informatique de lecture (200).

14. Terminal mobile (100), dans lequel le terminal mobile (100) a stocké sur celui-ci une identité électronique (113) gérée par une application (108) installée sur le terminal mobile (100), dans lequel le terminal mobile (100) comprend un processeur (102), une mémoire (104) ayant des instructions de programme exécutables et une interface de communication (122) pour communiquer avec un serveur (280) sur un réseau (150), qui fournit un élément de sécurité distant (292) pour l'identité électronique (113),

dans lequel le processeur (102) est configuré pour commander, lors de l'exécution des instructions de programme, le terminal mobile (100) à exécuter un procédé destiné à lire un ou plusieurs attributs d'identité (109) de l'identité électronique (113),

dans lequel le procédé par l'application (108) sur le terminal mobile (100) comprend les étapes consistant à :

• recevoir une requête de lecture depuis un système informatique de lecture (200),

• envoyer les attributs d'identité (109) à faire lire au serveur (280), dans lequel les attributs d'identité (109) sont chiffrés en utilisant une clé cryptographique attribuée à l'identité électronique (113),

• en réponse à l'étape consistant à envoyer les attributs d'identité (109) à faire lire, recevoir les attributs d'identité (109) à faire lire chiffrés en utilisant une clé cryptographique symétrique éphémère (286),

• transférer les attributs d'identité (109) à faire lire, chiffrés en utilisant la clé cryptographique symétrique éphémère (286), au système informatique de lecture (200).

15. Système distribué (170) comprenant un terminal mobile (100) selon la revendication 14 et un serveur (280) avec un élément de sécurité selon la revendication 13.

280

**Remote Server**

| Prozessor | 282 |

**Speicher** — 284

| Instruktionen | 288 |

| Sicherheitsverwaltungsmodul | 290 |

**Sicherheitselement** — 292

**Schlüsselbund** — 294

| Schlüssel | 285 |

| Sym. Schlüssel | 286 |

| Schnittstelle | 296 |

# Fig. 1

┌─────────────────────────────────────┐ ⌐100
│ **Mobiles Endgerät**                 │
│                                      │ ⌐102
│  ┌─────────────────────────────┐     │
│  │ **Prozessor**               │     │
│  └─────────────────────────────┘     │ ⌐104
│  ┌─────────────────────────────┐     │
│  │ **Speicher**                │     │ ⌐106
│  │  ┌───────────────────────┐  │     │
│  │  │ **BS**                │  │     │ ⌐108
│  │  └───────────────────────┘  │     │
│  │    ┌─────────────────────┐  │     │
│  │    │ **Applikation**     │  │     │ ⌐109
│  │    └─────────────────────┘  │     │
│  │    ┌─────────────────────┐  │     │
│  │    │ **Identitätsattribute** │  │     │
│  │    └─────────────────────┘  │     │
│  └─────────────────────────────┘     │ ⌐110
│  ┌─────────────────────────────┐     │
│  │ **Sicherheitselement BS**   │     │ ⌐118
│  └─────────────────────────────┘     │
│  ┌─────────────────────────────┐     │ ⌐120
│  │ **Nutzerschnittstelle**     │     │
│  └─────────────────────────────┘     │
│  ┌─────────────────────────────┐     │ ⌐122
│  │ **Sensor**                  │     │
│  └─────────────────────────────┘     │
│  ┌─────────────────────────────┐     │
│  │ **Kommunikationsschnittstelle** │     │
│  └─────────────────────────────┘     │
└─────────────────────────────────────┘

# Fig. 2

| | |
|---|---|
| Empfangen auszulesende Identitätsattribute | 300 |

↓

| | |
|---|---|
| Entschlüsseln auszulesende Identitätsattribute | 302 |

↓

| | |
|---|---|
| Verschlüsseln auszulesende Identitätsattribute | 304 |

↓

| | |
|---|---|
| Senden auszulesende Identitätsattribute | 306 |

# Fig. 3

| | |
|---|---|
| Empfangen Leseanfrage | 320 |

↓

| | |
|---|---|
| Senden auszulesende Identitätsattribute | 322 |

↓

| | |
|---|---|
| Empfangen auszulesende Identitätsattribute | 324 |

↓

| | |
|---|---|
| Weiterleiten auszulesende Identitätsattribute | 326 |

# Fig. 4

| Installieren Applikation | 340 |

↓

| Senden erste Initialisierungsanfrage | 342 |

↓

| Empfangen erste Initialisierungsanfrage | 344 |

↓

| Senden zweite Initialisierungsanfrage | 346 |

↓

| Aufbau verschlüsselter Kanal | 348 |

↓

| Kryptographisches Koppeln | 350 |

Fig. 5

| Installieren Applikation | 360 |

↓

| Ermitteln zur Verfügung stehender Sicherheitselemente | 362 |

↓

| Auswählen Sicherheitselemente | 364 |

↓

| Senden erste Initialisierungsanfrage | 366 |

↓

| Empfangen erste Initialisierungsanfrage | 368 |

↓

| Senden zweite Initialisierungsanfrage | 370 |

↓

| Aufbau verschlüsselter Kanal | 372 |

↓

| Kryptographisches Koppeln | 374 |

Fig. 6

Fig. 7

280

**Remote Server**

292

Sicherheitselement

200

**Auslesendes Computersystem**

500: $K_{PU}$

502: Erzeugen Geheimnis $S(K_{PR}, \widetilde{K_{PU}})$

504: Erzeugen Geheimnis $S(K_{PU}, \widetilde{K_{PR}})$

506: Erzeugen Zufallszahl RN

508: Erzeugen $K_{SYM}(S, RN)$ $K_{MAC}(S, RN)$

510: Erzeugen Authentisierungstoken $T(K_{MAC}, \widetilde{K_{PU}})$

512: T, RN

514: Erzeugen $K_{SYM}(S, RN)$ $K_{MAC}(S, RN)$

516: Validieren T mit $K_{MAC}, \widetilde{K_{PU}}$

Fig. 8

100

**Mobiles Endgerät**

108

**ID-Anwendungsprogramm**

105

ID-Client

107

**ID-Verwaltungsmodul**

113

| Profil P1 | Profil P2 | ··· | Profil Pn |

106

BS

110

Sicherheitselement BS

Fig. 9

280

| Remote Server |
|---|
| Prozessor |
| **Speicher** |
| Instruktionen |
| Sicherheitsverwaltungsmodul |
| **Sicherheitselement** |
| Keys P1 / Keys P1 / ... / Keys PN |
| Schnittstelle |

282

284

288

290

292

294

285

286

296

Fig. 10

**Fig. 11A**

Fig. 11B

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102019100335 A1

**In der Beschreibung aufgeführte Nicht-Patentliteratur**

- Key Management Techniques. **VON A. MENEZES** ; **P. VAN OORSCHOT** ; **S. VANSTONE**. Handbook of Applied Cryptography. CRC PRESS, 01 October 1996, 543-590